# EUROPEAN PATENT APPLICATION

(11) **EP 4 801 111 A1**
(43) Date of publication of application: **02.09.2026**
(21) Application number: 24881382.6
(22) Date of filing: 30.09.2024
(51) Int. Cl.: H04W 36/14

(54) **NETWORK NODE SELECTION METHOD, APPARATUS AND SYSTEM, AND DEVICE AND STORAGE MEDIUM**

(30) Priority: 24.10.2023 CN 202311386459
(71) Applicant: Datang Mobile Communications Equipment Co., Ltd., Beijing 100085 (CN)
(72) Inventor: CHENG, Zhimi, Beijing 100085 (CN); SONG, Yaqin, Beijing 100085 (CN); WANG, Yapeng, Beijing 100085 (CN)
(74) Representative: Ipsilon
(86) International application number: PCT/CN2024/122976
(87) International publication number: WO 2025/087016

(57) **Abstract**

The present disclosure discloses a method for selecting a network node, device, apparatus, system and storage medium. In the present disclosure, a user equipment (UE) sends UE capability information and/or UE service information to an access network device; the access network device determines a first distributed network node based on the UE capability information and/or the UE service information, and sends the UE capability information and/or the UE service information to the first distributed network node; the first distributed network node determines a first target network node based on the UE capability information and/or the UE service information, and sends attribute information of the first target network node to the UE; and the UE accesses the first target network node according to the attribute information. Since the first target network node accessed by the UE is selected on requirement by the access network device and the first distributed network node, the UE is matched with a appropriate network node, thereby realizing on-requirement and accurate service provision for the UE and maximized utilization of network resources.

## Description

### CROSS-REFERENCE TO RELATED APPLICATIONS

The present disclosure claims priority to the Chinese patent application No. 202311386459.5, filed with the China National Intellectual Property Administration on October 24, 2023, entitled "METHOD FOR SELECTING NETWORK NODE, APPARATUS, DEVICE, SYSTEM AND STORAGE MEDIUM", which is incorporated herein by reference in its entirety.

### TECHNICAL FIELD

The present disclosure relates to the field of communications technologies, and in particular, to a method for selecting network node, apparatus, device, system and storage medium.

### BACKGROUND

With the continuous development of communications technologies, decentralized network architectures with centralized-distributed coordination have been increasingly widely applied.

Distributed network nodes with complete functions and different functional levels are established, and the distributed network nodes are organized into an autonomous network architecture according to service requirements. Such a network architecture can provide targeted network services according to requirements such as specific service scenarios, user scales and geographical environments, which is defined as a decentralized network architecture with centralized-distributed coordination. Network nodes in the above network architecture can provide network services for User Equipment (UE).

It is an urgent problem to be solved that how to select a network node matching UEs with different capabilities or service requirements.

### SUMMARY

In order to address above problems, embodiments of the present disclosure provide a method for selecting a network node, apparatus, device, system and storage medium, which may match a appropriate network node for the UE, thereby realizing providing accurate and on-requirement service of network resources.

In a first aspect, the present disclosure provides a method for selecting a network node. The method is applied to UE, which comprises: sending a first message to an access network (AN) device, wherein the first message comprises UE capability information and/or UE service information, and the first message is configured to indicate the access network device to select a first distributed network node matching the UE capability information and/or the UE service information; receiving a second message sent by the first distributed network node, wherein the second message comprises attribute information of a first target network node; accessing the first target network node according to the attribute information of the first target network node.

In some embodiments, the UE capability information comprises one or more of the following information: UE capability type, UE capability priority, UE capability usage time, and UE capability usage location;wherein the UE capability type comprises one or more of the following: computing power, AI model, and AI algorithm, data service.

In some embodiments, the UE service information comprises one or more of the following information: UE service type, UE service requirement priority, UE service requirement usage time, and UE service requirement usage location;wherein the UE service type comprises one or more of the following: computing power service, computation service, and data service.

In some embodiments, the first message comprises AN parameters, and the UE capability information and/or the UE service information is encapsulated in the AN parameters.

In some embodiments, the attribute information of the first target network node comprises one or more of the following information: a node identifier of the first target network node, service information provided by the first target network node, and network service capacity of the first target network.

In some embodiments, receiving the second message sent by the first distributed network node comprises: receiving a registration accept message sent by the first distributed network node in the case that the first target network node is the first distributed network node, wherein the registration accept message comprises the attribute information of the first distributed network node.

In some embodiments, receiving the second message sent by the first distributed network node comprises: receiving a registration accept message sent by the first distributed network node in the case that the first target network node is a second distributed network node, wherein the registration accept message comprises attribute information of the second distributed network node, and the second distributed network node is determined by the first distributed network node based on the UE capability information and/or the UE service information.

In some embodiments, receiving the second message sent by the first distributed network node comprises: receiving a UE policy message sent by the first distributed network node in the case that the first target network node is a second distributed network node, wherein the UE policy message comprises attribute information of the second distributed network node, and the second distributed network node is determined by the first distributed network node based on the UE capability information and/or the UE service information.

In some embodiments, the method further comprises: updating a UE policy based on the UE policy message; sending a response message corresponding to the UE policy message to the first target network node in the case that the UE supports processing the UE policy.

In some embodiments, receiving the second message sent by the first distributed network node comprises: receiving a UE configuration update command message sent by the first distributed network node in the case that the first target network node is a second distributed network node, wherein the UE configuration update command message comprises attribute information of the second distributed network node, and the second distributed network node is determined by the first distributed network node based on the UE capability information and/or the UE service information.

In some embodiments, the UE configuration update command message further comprises a UE configuration update indication, and the method further comprises: performing configuration update based on the UE configuration update indication; sending a configuration update success message to the first target network node in the case that the configuration update succeeds.

In some embodiments, the method further comprises: sending a service requirement request message to the first target network node; wherein the service requirement request message is configured to indicate the first target network node to determine a second target network node based on UE activation capability and/or UE service information, and the second target network node is configured to provide network services for the UE.

In some embodiments, the UE activation capability and/or the UE service information is encapsulated in the service requirement request message; or the UE activation capability and/or the UE service information is stored in the first target network node.

In some embodiments, in the case that the second target network node is the first target network node, the first target network node is configured to provide network services for the UE; in the case that the second target network node is a third distributed target network node, the third distributed network node provides network services for the UE by cooperating with the first target network node, wherein the third distributed network node is a network node having a cooperative relationship with the first target network node.

In some embodiments, the method further comprises: sending an update request message to the first target network node, wherein the update request message comprises updated UE capability information and/or updated UE service information, and the update request message is configured to indicate the first target network node to select a third target network node matching the updated UE capability information and/or the updated UE service information; receiving a third message sent by the first target network node, wherein the third message comprises attribute information of the third target network node; accessing the third target network node based on the attribute information of the third target network node.

In a second aspect, the present disclosure provides a method for selecting a network node. The method is applied to a first distributed network node, which comprises: receiving a registration request message sent by an access network device, wherein the registration request message comprises User Equipment UE capability information and/or UE service information; determining a first target network node in a distributed network based on the UE capability information and/or the UE service information; sending a second message to the UE, wherein the second message comprises attribute information of the first target network node, and the attribute information of the first target network node is configured to indicate the UE to access the first target network node.

In some embodiments, determining the first target network node in the distributed network based on the UE capability information and/or the UE service information comprises: performing matching processing between capability information and/or service information of the first distributed network node and the UE capability information and/or the UE service information; determining the first distributed network node as the first target network node in the case that the capability information and/or the service information of the first distributed network node successfully matches the UE capability information and/or the UE service information.

In some embodiments, sending the second message to the UE comprises: sending a registration accept message to the UE, wherein the registration accept message comprises attribute information of the first distributed network node, and the attribute information of the first distributed network node is configured to indicate the UE to access the first distributed network node.

In some embodiments, the method further comprises: performing matching processing between capability information and/or service information of other distributed network nodes in the distributed network and the UE capability information and/or the UE service information in the case that the capability information and/or the service information of the first distributed network node fails to match the UE capability information and/or the UE service information; determining a second distributed network node as the first target network node, wherein capability information and/or service information of the second distributed network nodes successfully matches the UE capability information and/or the UE service information.

In some embodiments, sending the second message to the UE comprises: sending a registration accept message to the UE, wherein the registration accept message comprises attribute information of the second distributed network node, and the attribute information of the second distributed network node is configured to indicate the UE to access the second distributed network node.

In some embodiments, sending the second message to the UE comprises: sending a UE policy message to the UE, wherein the UE policy message comprises attribute information of the second distributed network node, and the attribute information of the second distributed network node is configured to indicate the UE to access the second distributed network node.

In some embodiments, sending the second message to the UE comprises: sending a UE configuration update command message to the UE, wherein the UE configuration update command message comprises attribute information of the second distributed network node, and the attribute information of the second distributed network node is configured to indicate the UE to access the second distributed network node.

In some embodiments, the method further comprises: receiving a service requirement request message sent by the UE; obtaining UE activation capability and/or UE service information; in response to an indication of the service requirement request message, determining a second target network node according to the UE activation capability and/or the UE service information, wherein the second target network node is configured to provide network services for the UE.

In some embodiments, obtaining the UE activation capability and/or the UE service information comprises: in the case that the service requirement request message comprises the UE activation capability and/or the UE service information, obtaining the UE activation capability and/or the UE service information comprised in the service requirement request message; in the case that the service requirement request message does not comprise the UE activation capability and/or the UE service information, obtaining the UE activation capability and/or the UE service information stored in the first target network node.

In some embodiments, determining the second target network node according to the UE activation capability and/or the UE service information comprises: determining whether capability information and/or service information of the first target network node satisfies the UE activation capability and/or the UE service information; in the case that the capability information and/or the service information of the first target network node satisfies the UE activation capability and/or the UE service information, determining the first target network node as the second target network node, wherein the first target network node provides network services for the UE.

In some embodiments, the method further comprises: in the case that the capability information and/or the service information of the first target network node fails to satisfy the UE activation capability and/or the UE service information, taking a third distributed network node having a cooperative relationship with the first target network node as the second target network node, wherein the third distributed network node provides network services for the UE by cooperating with the first target network node.

In some embodiments, the capability information and/or the service information of the first target network node comprises: the capability priority being served and/or the service requirement priority being served by the first target network; the UE activation capability and/or the UE service information comprises: UE activation capability priority and/or UE service requirement priority; the case that the capability information and/or the service information of the first target network node fails to satisfy the UE activation capability and/or the UE service information comprises: the capability priority being served and/or the service requirement priority being served by the first target network is higher than the UE activation capability priority and/or the UE service requirement priority.

In some embodiments, the capability information and/or the service information of the first target network node comprises: capability usage time being served and/or service requirement usage time being served by the first target network; the UE activation capability and/or the UE service information comprises: UE activation capability usage time and/or UE service requirement usage time; the case that the capability information and/or the service information of the first target network node fails to satisfy the UE activation capability and/or the UE service information comprises: the capability usage time being served and/or the service requirement usage time being served by the first target network is longer than the UE activation capability usage time and/or the UE service requirement usage time.

In some embodiments, the capability information and/or the service information of the first target network node comprises: the capability usage location being served and/or the service requirement usage location being served by the first target network; the UE activation capability and/or the UE service information comprises: UE activation capability usage location and/or UE service requirement usage location; the case that the capability information and/or the service information of the first target network node fails to satisfy the UE activation capability and/or the UE service information comprises: the capability usage location being served and/or the service requirement usage location being served by the first target network is same as the UE activation capability usage location and/or the UE service requirement usage location.

In some embodiments, the method further comprises: receiving an update request message sent by the UE, wherein the update request message comprises updated UE capability information and/or updated UE service information; determining a third target network node based on the updated UE capability information and/or the updated UE service information; sending a third message to the UE, wherein the third message comprises attribute information of the third target network node, and the attribute information of the third target network node is configured to indicate the UE to access the third target network node.

In a third aspect, the present disclosure provides a method for selecting a network node. The method is applied to an access network device, which comprises: receiving a first message sent by a User Equipment UE, wherein the first message comprises UE capability information and/or UE service information; determining a first distributed network node in a distributed network based on the UE capability information and/or the UE service information; sending a registration request message to the first distributed network node, wherein the registration request message comprises the UE capability information and/or the UE service information, and the registration request message is configured to indicate the first distributed network node to select a first target network node matching the UE capability information and/or the UE service information.

In some embodiments, the UE capability information comprises one or more of the following information: UE capability type, UE capability priority, UE capability usage time, and UE capability usage location; wherein the UE capability type comprises one or more of the following: computing power, Artificial Intelligence AI model, AI algorithm, and data service.

In some embodiments, the UE service information comprises one or more of the following information: UE service type, UE service requirement priority, UE service requirement usage time, and UE service requirement usage location; wherein the UE service type comprises one or more of the following: computing power service, computation service, and data service.

In some embodiments, the first message comprises AN parameters, and the UE capability information and/or the UE service information is encapsulated in the AN parameters.

In some embodiments, the attribute information of the first target network node comprises one or more of the following information: a node identifier of the first target network node, service information provided by the first target network node, and network service capacity of the first target network.

In a fourth aspect, the present disclosure provides a user equipment for selecting a network node. The UE includes: a memory, a transceiver, and a processor; wherein the memory is configured to store a computer program; the transceiver is configured to send and receive data under the control of the processor; and the processor is configured to read the computer program from the memory and execute the following steps: sending a first message to an access network (AN) device, wherein the first message comprises UE capability information and/or UE service information, and the first message is configured to indicate the access network device to select a first distributed network node matching the UE capability information and/or the UE service information; receiving a second message sent by the first distributed network node, wherein the second message comprises attribute information of a first target network node; accessing the first target network node according to the attribute information of the first target network node.

In some embodiments, the UE capability information comprises one or more of the following information: UE capability type, UE capability priority, UE capability usage time, and UE capability usage location;wherein the UE capability type comprises one or more of the following: computing power, AI model, and AI algorithm, data service.

In some embodiments, the UE service information comprises one or more of the following information: UE service type, UE service requirement priority, UE service requirement usage time, and UE service requirement usage location;wherein the UE service type comprises one or more of the following: computing power service, computation service, and data service.

In some embodiments, the first message comprises AN parameters, and the UE capability information and/or the UE service information is encapsulated in the AN parameters.

In some embodiments, the attribute information of the first target network node comprises one or more of the following information: a node identifier of the first target network node, service information provided by the first target network node, and network service capacity of the first target network.

In some embodiments, receiving the second message sent by the first distributed network node comprises: receiving a registration accept message sent by the first distributed network node in the case that the first target network node is the first distributed network node, wherein the registration accept message comprises the attribute information of the first distributed network node.

In some embodiments, receiving the second message sent by the first distributed network node comprises: receiving a registration accept message sent by the first distributed network node in the case that the first target network node is a second distributed network node, wherein the registration accept message comprises attribute information of the second distributed network node, and the second distributed network node is determined by the first distributed network node based on the UE capability information and/or the UE service information.

In some embodiments, receiving the second message sent by the first distributed network node comprises: receiving a UE policy message sent by the first distributed network node in the case that the first target network node is a second distributed network node, wherein the UE policy message comprises attribute information of the second distributed network node, and the second distributed network node is determined by the first distributed network node based on the UE capability information and/or the UE service information.

In some embodiments, the processor further configured to perform: updating a UE policy based on the UE policy message; sending a response message corresponding to the UE policy message to the first target network node in the case that the UE supports processing the UE policy.

In some embodiments, receiving the second message sent by the first distributed network node comprises: receiving a UE configuration update command message sent by the first distributed network node in the case that the first target network node is a second distributed network node, wherein the UE configuration update command message comprises attribute information of the second distributed network node, and the second distributed network node is determined by the first distributed network node based on the UE capability information and/or the UE service information.

In some embodiments, the UE configuration update command message further comprises a UE configuration update indication, and the processor is further configured to perform the following steps: performing configuration update based on the UE configuration update indication; sending a configuration update success message to the first target network node in the case that the configuration update succeeds.

In some embodiments, the processor is further configured to perform the following steps: sending a service requirement request message to the first target network node; wherein the service requirement request message is configured to indicate the first target network node to determine a second target network node based on UE activation capability and/or UE service information, and the second target network node is configured to provide network services for the UE.

In some embodiments, the UE activation capability and/or the UE service information is encapsulated in the service requirement request message; or the UE activation capability and/or the UE service information is stored in the first target network node.

In some embodiments, in the case that the second target network node is the first target network node, the first target network node is configured to provide network services for the UE; in the case that the second target network node is a third distributed target network node, the third distributed network node provides network services for the UE by cooperating with the first target network node, wherein the third distributed network node is a network node having a cooperative relationship with the first target network node.

In some embodiments, the processor is further configured to perform the following steps: sending an update request message to the first target network node, wherein the update request message comprises updated UE capability information and/or updated UE service information, and the update request message is configured to indicate the first target network node to select a third target network node matching the updated UE capability information and/or the updated UE service information; receiving a third message sent by the first target network node, wherein the third message comprises attribute information of the third target network node; accessing the third target network node based on the attribute information of the third target network node.

In a fifth aspect, the present disclosure provides a first distributed network node for selecting a network node. The first distributed network node includes a memory, a transceiver, and a processor; wherein the memory is configured to store a computer program; the transceiver is configured to send and receive data under the control of the processor; and the processor is configured to read the computer program from the memory and execute the following steps: receiving a registration request message sent by an access network device, wherein the registration request message comprises User Equipment UE capability information and/or UE service information; determining a first target network node in a distributed network based on the UE capability information and/or the UE service information; sending a second message to the UE, wherein the second message comprises attribute information of the first target network node, and the attribute information of the first target network node is configured to indicate the UE to access the first target network node.

In some embodiments, determining the first target network node in the distributed network based on the UE capability information and/or the UE service information comprises: performing matching processing between capability information and/or service information of the first distributed network node and the UE capability information and/or the UE service information; determining the first distributed network node as the first target network node in the case that the capability information and/or the service information of the first distributed network node successfully matches the UE capability information and/or the UE service information.

In some embodiments, sending the second message to the UE comprises: sending a registration accept message to the UE, wherein the registration accept message comprises attribute information of the first distributed network node, and the attribute information of the first distributed network node is configured to indicate the UE to access the first distributed network node.

In some embodiments, the method further comprises: performing matching processing between capability information and/or service information of other distributed network nodes in the distributed network and the UE capability information and/or the UE service information in the case that the capability information and/or the service information of the first distributed network node fails to match the UE capability information and/or the UE service information; determining a second distributed network node as the first target network node, wherein capability information and/or service information of the second distributed network nodes successfully matches the UE capability information and/or the UE service information.

In some embodiments, sending the second message to the UE comprises: sending a registration accept message to the UE, wherein the registration accept message comprises attribute information of the second distributed network node, and the attribute information of the second distributed network node is configured to indicate the UE to access the second distributed network node.

In some embodiments, sending the second message to the UE comprises: sending a UE policy message to the UE, wherein the UE policy message comprises attribute information of the second distributed network node, and the attribute information of the second distributed network node is configured to indicate the UE to access the second distributed network node.

In some embodiments, sending the second message to the UE comprises: sending a UE configuration update command message to the UE, wherein the UE configuration update command message comprises attribute information of the second distributed network node, and the attribute information of the second distributed network node is configured to indicate the UE to access the second distributed network node.

In some embodiments, the processor is further configured to execute the following steps: receiving a service requirement request message sent by the UE; obtaining UE activation capability and/or UE service information; in response to an indication of the service requirement request message, determining a second target network node according to the UE activation capability and/or the UE service information, wherein the second target network node is configured to provide network services for the UE.

In some embodiments, obtaining the UE activation capability and/or the UE service information comprises: in the case that the service requirement request message comprises the UE activation capability and/or the UE service information, obtaining the UE activation capability and/or the UE service information comprised in the service requirement request message; in the case that the service requirement request message does not comprise the UE activation capability and/or the UE service information, obtaining the UE activation capability and/or the UE service information stored in the first target network node.

In some embodiments, determining the second target network node according to the UE activation capability and/or the UE service information comprises: determining whether capability information and/or service information of the first target network node satisfies the UE activation capability and/or the UE service information; in the case that the capability information and/or the service information of the first target network node satisfies the UE activation capability and/or the UE service information, determining the first target network node as the second target network node, wherein the first target network node provides network services for the UE.

In some embodiments, the processor is further configured to execute the following steps: in the case that the capability information and/or the service information of the first target network node fails to satisfy the UE activation capability and/or the UE service information, taking a third distributed network node having a cooperative relationship with the first target network node as the second target network node, wherein the third distributed network node provides network services for the UE by cooperating with the first target network node.

In some embodiments, the capability information and/or the service information of the first target network node comprises: the capability priority being served and/or the service requirement priority being served by the first target network; the UE activation capability and/or the UE service information comprises: UE activation capability priority and/or UE service requirement priority; the case that the capability information and/or the service information of the first target network node fails to satisfy the UE activation capability and/or the UE service information comprises: the capability priority being served and/or the service requirement priority being served by the first target network is higher than the UE activation capability priority and/or the UE service requirement priority.

In some embodiments, the capability information and/or the service information of the first target network node comprises: capability usage time being served and/or service requirement usage time being served by the first target network; the UE activation capability and/or the UE service information comprises: UE activation capability usage time and/or UE service requirement usage time; the case that the capability information and/or the service information of the first target network node fails to satisfy the UE activation capability and/or the UE service information comprises: the capability usage time being served and/or the service requirement usage time being served by the first target network is longer than the UE activation capability usage time and/or the UE service requirement usage time.

In some embodiments, the capability information and/or the service information of the first target network node comprises: the capability usage location being served and/or the service requirement usage location being served by the first target network; the UE activation capability and/or the UE service information comprises: UE activation capability usage location and/or UE service requirement usage location; the case that the capability information and/or the service information of the first target network node fails to satisfy the UE activation capability and/or the UE service information comprises: the capability usage location being served and/or the service requirement usage location being served by the first target network is same as the UE activation capability usage location and/or the UE service requirement usage location.

In some embodiments, the processor is further configured to execute the following steps: receiving an update request message sent by the UE, wherein the update request message comprises updated UE capability information and/or updated UE service information; determining a third target network node based on the updated UE capability information and/or the updated UE service information; sending a third message to the UE, wherein the third message comprises attribute information of the third target network node, and the attribute information of the third target network node is configured to indicate the UE to access the third target network node.

In a sixth aspect, the present disclosure provides an access network device for selecting a network node. The access network device comprising: a memory, a transceiver, and a processor; wherein the memory is configured to store a computer program; the transceiver is configured to send and receive data under the control of the processor; and the processor is configured to read the computer program from the memory and execute receiving a first message sent by a User Equipment UE, wherein the first message comprises UE capability information and/or UE service information; determining a first distributed network node in a distributed network based on the UE capability information and/or the UE service information; sending a registration request message to the first distributed network node, wherein the registration request message comprises the UE capability information and/or the UE service information, and the registration request message is configured to indicate the first distributed network node to select a first target network node matching the UE capability information and/or the UE service information.

In some embodiments, the UE capability information comprises one or more of the following information: UE capability type, UE capability priority, UE capability usage time, and UE capability usage location; wherein the UE capability type comprises one or more of the following: computing power, Artificial Intelligence AI model, AI algorithm, and data service.

In some embodiments, the UE service information comprises one or more of the following information: UE service type, UE service requirement priority, UE service requirement usage time, and UE service requirement usage location; wherein the UE service type comprises one or more of the following: computing power service, computation service, and data service.

In some embodiments, the first message comprises AN parameters, and the UE capability information and/or the UE service information is encapsulated in the AN parameters.

In a seventh aspect, the present disclosure provides a network node selection apparatus. The network node selection apparatus is deployed in a User Equipment UE, which comprises: a first message sending module, configured to send a first message to an access network device, wherein the first message comprises UE capability information and/or UE service information, and the first message is configured to indicate the access network device to select a first distributed network node matching the UE capability information and/or the UE service information; a second message receiving module, configured to receive a second message sent by the first distributed network node, wherein the second message comprises attribute information of a first target network node; a network access module, configured to access the first target network node according to the attribute information of the first target network node.

In a eighth aspect, the present disclosure provides a network node selection apparatus. The network node selection apparatus is deployed in a first distributed network node, which comprises: a registration request message receiving module, configured to receive a registration request message sent by an access network device, wherein the registration request message comprises User Equipment UE capability information and/or UE service information; a first target network node determining module, configured to determine a first target network node in a distributed network based on the UE capability information and/or the UE service information; a second message sending module, configured to send a second message to the UE, wherein the second message comprises attribute information of the first target network node, and the attribute information of the first target network node is configured to indicate the UE to access the first target network node.

In a ninth aspect, the present disclosure provides a network node selection apparatus. The network node selection apparatus is deployed in an access network device, which comprises: a first message receiving module, configured to receive a first message sent by a User Equipment UE, wherein the first message comprises UE capability information and/or UE service information; a first distributed network node determining module, configured to determine a first distributed network node in a distributed network based on the UE capability information and/or the UE service information; a registration request message sending module, configured to send a registration request message to the first distributed network node, wherein the registration request message comprises the UE capability information and/or the UE service information, and the registration request message is configured to indicate the first distributed network node to select a first target network node matching the UE capability information and/or the UE service information.

In a tenth aspect, the present disclosure provides a network node selection system. The network node selection system comprises: a User Equipment UE, an access network device, and a plurality of distributed network nodes, wherein the plurality of distributed network nodes comprises a first distributed network node; the UE is configured to send a first message to the access network device, the first message comprising UE capability information and/or UE service information; receive a second message sent by the first distributed network node, the second message comprising attribute information of a first target network node; and access the first target network node according to the attribute information of the first target network node; the access network device is configured to determine the first distributed network node in the distributed network based on the UE capability information and/or the UE service information, and send a registration request message to the first distributed network node, the registration request message comprising the UE capability information and/or the UE service information; the first distributed network node is configured to determine the first target network node in the distributed network based on the UE capability information and/or the UE service information, and send the second message to the UE.

In some embodiments, the plurality of distributed network nodes further comprises a second distributed network node; wherein in the case that the capability information and/or service information of the first distributed network node fails to match the UE capability information and/or the UE service information, the second distributed network node is a network node with capability information and/or provided service information successfully matching the UE capability information and/or the UE service information from other distributed network nodes in the distributed network.

In some embodiments, wherein the plurality of distributed network nodes further comprises a third distributed network node; wherein the third distributed network node is a network node having a cooperative relationship with the first target network node.

In an eleventh aspect, the present disclosure provides a computer-readable storage medium. The computer-readable storage medium stores a program, wherein the program is configured to enable a processor to execute the method for selecting a network node according to any one of the first aspect above.

In a twelfth aspect, the present disclosure provides a computer-readable storage medium. The computer-readable storage medium stores a program, wherein the program is configured to enable a processor to execute the method for selecting a network node according to any one of the second aspect above.

In a thirteenth aspect, the present disclosure provides a computer-readable storage medium. The computer-readable storage medium stores a program, wherein the program is configured to enable a processor to execute the method for selecting a network node according to any one of the third aspect above.

Embodiments of the present disclosure provide a method for selecting a network node, device, apparatus, system and storage medium. The method includes: sending, by a UE, a first message to an access network device, where the first message comprises UE capability information and/or UE service information; after the access network device receiving the first message, determining, by the access network device, a first distributed network node in a distributed network based on the UE capability information and/or the UE service information, and sending a registration request message to the first distributed network node; after receiving the registration request message, determining, by the first distributed network node, a first target network node in the distributed network based on the UE capability information and/or the UE service information, and sending a second message to the UE, wherein the second message comprises attribute information of the first target network node; after receiving the second message, accessing, by the UE, the first target network node according to the attribute information of the first target network node.

Since the first distributed network node is selected by the access network device based on the UE capability information and/or the UE service information, and the first target network node is selected by the first distributed network node based on the UE capability information and/or the UE service information, the first target network node accessed by the UE is selected on requirement by the access network device and the first distributed network node. Thereby, the UE is matching with an appropriate network node, which realizes accurate on-requirement service provided by network nodes and maximized utilization of network resources.

### BRIEF DESCRIPTION OF THE DRAWINGS

The above and other features, advantages, and aspects of the embodiments of the present disclosure will become more apparent with reference to the following detailed implementations in conjunction with the accompanying drawings. Identical or similar reference numerals denote identical or similar elements throughout the drawings. It should be understood that the drawings are schematic, and the original components and elements are not necessarily drawn to scale.
FIG. 1 is a schematic diagram of a network architecture provided by an embodiment of the present disclosure;
FIG. 2 is a schematic flowchart of a method for selecting a network node performed by a UE provided by an embodiment of the present disclosure;
FIG. 3 is a schematic flowchart of a method for selecting a network node performed by a distributed network node provided by an embodiment of the present disclosure;
FIG. 4 is a schematic flowchart of a method for selecting a network node performed by an access network device provided by an embodiment of the present disclosure;
FIG. 5 is a schematic flowchart of a UE registering in a network provided by an embodiment of the present disclosure;
FIG. 6 is a schematic flowchart of interaction of attribute information of a first target network node provided by an embodiment of the present disclosure;
FIG. 7 is a schematic flowchart of a UE sending a service requirement request to a network provided by an embodiment of the present disclosure;
FIG. 8 is a schematic flowchart of a UE sending a capability update request to a network provided by an embodiment of the present disclosure;
FIG. 9 is a schematic flowchart of interaction of a UE policy message provided by an embodiment of the present disclosure;
FIG. 10 is a schematic flowchart of interaction of a UE configuration update command message provided by an embodiment of the present disclosure;
FIG. 11 is a structural schematic diagram of a device for selecting a network node provided by an embodiment of the present disclosure;
FIG. 12 is a structural schematic diagram of a network node selection apparatus provided by an embodiment of the present disclosure;
FIG. 13 is a structural schematic diagram of another network node selection apparatus provided by an embodiment of the present disclosure;
FIG. 14 is a structural schematic diagram of yet another network node selection apparatus provided by an embodiment of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as being limited to the embodiments set forth herein; instead, these embodiments are provided for a more thorough and complete understanding of the present disclosure. It should be understood that the drawings and embodiments of the present disclosure are used for illustrative purposes only and are not intended to limit the protection scope of the present disclosure.

To better understand the method for selecting network node, apparatus, device, system and computer-readable storage medium provided by the present disclosure, the application scenarios of the present disclosure are first introduced.

An important development trend of 6th generation wireless systems (6G) network is a decentralized network architecture with centralized-distributed coordination. The network architectures of 5th generation wireless systems (5G) and previous generations of communication technologies are centralized network architectures, that is, core network computer rooms are centrally deployed on requirements to realize the centralized deployment of core network functions. With the development of networks, driven by both service scenarios and technological progress, the design of the 6G network architecture needs to take into account a distributed network architecture, and is gradually evolving towards distribution. With the distributed development of intelligence and cloud computing, new connections and new networks are also required to move towards distribution.

6G will target diverse scenarios and network requirements across air, space, ground, and sea domains, and a centralized network architecture cannot uniformly satisfy all scenarios. To address the challenge, the 6G network architecture needs to transcend centralized control and progressively evolve toward a distributed architecture, extending more network functions to the network edge and establishing distributed homogeneous small cloud units (SCUs) with varying functional levels. Each SCU is self-contained with complete control and data forwarding capabilities. Multiple SCUs can form autonomous micro-networks according to service requirements, providing targeted network services based on specific service scenarios, user scales, geographical environments, etc. These micro-cloud units are also referred to as distributed network nodes, representing an on-requirement customized or fully functional core network; moreover, these distributed network nodes can be managed and controlled by a specific centralized network node.

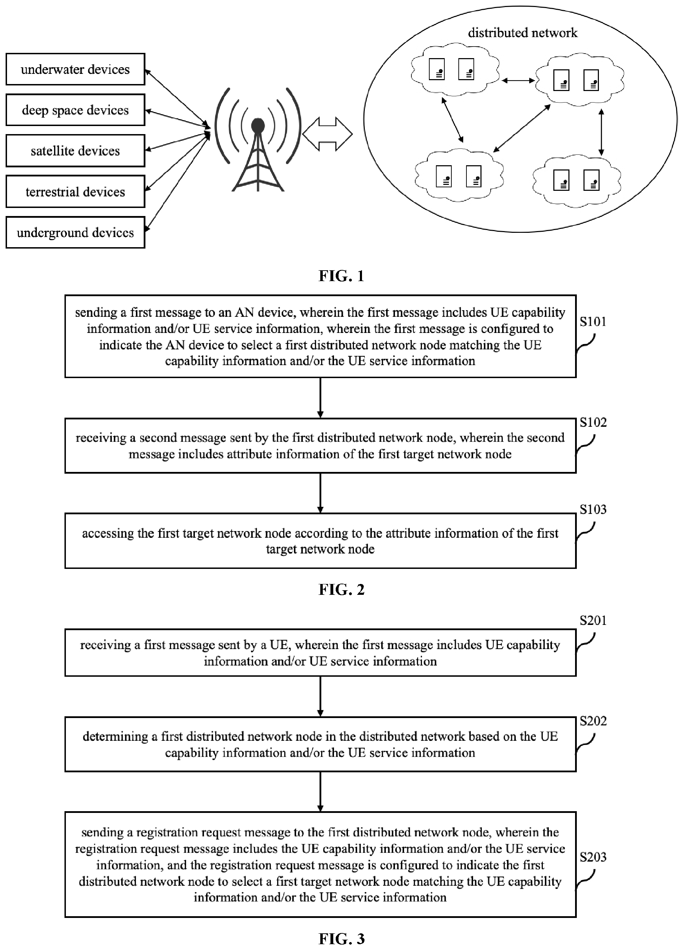

FIG. 1 is a schematic diagram of a network architecture provided by an embodiment of the present disclosure. As shown in FIG. 1, the network architecture may include a UE, an AN device, and a distributed network. Communication between the UE and the AN device may include uplink communication (i.e., communication from the UE to the AN device) and downlink communication (i.e., communication from the AN device to the UE). In uplink communication, the UE is configured to send an uplink signal to the AN device, and the AN device is configured to receive the uplink signal from the UE. In downlink communication, the AN device is configured to send a downlink signal to the UE, and the UE is configured to receive the downlink signal from the AN device. The distributed network communicates with the AN device. The distributed network includes a plurality of distributed network nodes, which are under the management and control of the AN device.

A UE may be a device that provides users with voice and/or data connectivity, such as a handheld device with a wireless connection function or another processing device connected to a wireless modem. A UE may also be referred to as a terminal device, a mobile station (MS), a mobile terminal (MT), and the like. As shown in FIG. 1, UEs can be classified into different types based on the network access modes, including terrestrial access devices, underground access devices, deep space access devices, satellite access devices, underwater access devices, and so on. Further, a UE may be a handheld terminal, a customer premise equipment (CPE), a laptop computer, a subscriber unit, a cellular phone, a smart phone, a wireless data card, a personal digital assistant (PDA) computer, a tablet computer, a wireless modem, a handheld device, a laptop computer, a session initiation protocol (SIP) phone, a cordless phone, a wireless local loop (WLL) station, a machine type communication (MTC) terminal, a wearable device (e.g., a smart watch, a smart bracelet, a pedometer, etc.), a vehicle-mounted device (e.g., an automobile, a bicycle, an electric vehicle, an airplane, a ship, a train, a high-speed rail, etc.), a virtual reality (VR) device, an augmented reality (AR) device, a wireless terminal in industrial control, a smart home device (e.g., a refrigerator, a television, an air conditioner, an electric meter, etc.), a smart robot, a workshop device, a wireless terminal in self-driving, a wireless terminal in remote medical surgery, a wireless terminal in a smart grid, a wireless terminal in transportation safety, a wireless terminal in a smart city, a wireless terminal in a smart home, an aerial device (e.g., a smart robot, a hot air balloon, an unmanned aerial vehicle, an airplane, etc.), or any other devices capable of accessing a network.

An AN device, also referred to as a radio access network (RAN) device, refers to a device that provides wireless access for terminal devices, and is mainly responsible for functions such as radio resource management on the air interface side, quality of service (QoS) flow management, data compression and encryption. An access network device may include various types of base stations, such as macro base stations, micro base stations (also called small stations), relay stations, and access points. The access network device may also include evolved Node Bs (eNB or eNodeB) in Long Term Evolution (LTE); base stations gNB in 5G networks or base stations in Public Land Mobile Networks (PLMN) evolved in future, Broadband Network Gateways (BNG), aggregation switches, or non-3rd Generation Partnership Project (3GPP) access devices, as well as Wireless Fidelity (WiFi) access points (AP), transmitting and Receiving Points (TRP), transmitting Points (TP), mobile switching centers, and devices performing base station functions in Device-to-Device (D2D), Vehicle-to-Everything (V2X) and Machine-to-Machine (M2M) communications.

A distributed network includes a plurality of distributed network nodes, wherein the distributed network node refers to a on-requirement customized or fully functional core network capable of providing services for user equipment, and may be one or more network elements, devices or entities that can provide services for terminal devices in 6G or next-generation communication systems.

It should be noted that the network architecture shown in FIG. 1 is not limited to only include the UE, AN device and distributed network illustrated in the figure, but may also include other UEs, AN devices and distributed networks not shown therein, which will not be enumerated one by one herein for the sake of brevity.

The technical solutions of the present disclosure can be applied to cellular systems related to the 3rd Generation Partnership Project (3GPP), such as the 6G communication system, and can also be applied to the Wireless Fidelity (WiFi) system, communication systems supporting the convergence of multiple wireless technologies, or future-oriented evolutionary systems.

As shown in FIG. 1, the distributed network includes a plurality of distributed network nodes. Therefore, it is necessary to select an appropriate distributed network node in the distributed network to allow the UE to access the network and provide network services for the UE according to the information of the UE. At present, the methods for selecting a network node used commonly include the following three methods.

### (1) Selecting a network node based on network node information configured and subscribed

It can configure allowed access network nodes, default network nodes and subscribed network nodes in the UE and subscription data function respectively. When the UE accesses the network, the network node is selected for network access based on the network node information carried by the UE or the subscribed network node information.

### (2) Selecting a network node based on Network Attached Storage (NAS) messages

It is assumed that the UE has successfully registered with the network, when the UE sends NAS messages to one or more network nodes, it needs to carry other parameters in addition to the NAS messages for the RAN to select a suitable network node. The other parameters include, but are not limited to, information such as network node identity, UE identity and session identity.

### (3) Selecting a Network Node Based on the UE Routing Policy

In the cross-domain scenario of the distributed network, when a Policy Control Function (PCF) delivers a UE routing policy, the routing selection description in the UE routing policy is added with a position to which a Data Network Name (DNN) belongs, i.e., the identity of the network node to which the DNN belongs. When a UE initiates session establishment, it may carry the network node to which the DNN belongs in a Radio Resource Control (RRC) message or a NAS message, thereby assisting the AN device, the Access Management Function or Session Management Function served currently, in determining an appropriate Session Management Function. When multiple network nodes are available, it can determine one network node that provides services for the UE based on other valid information.

The three methods for selecting a network node only take into account the "connection" service of network nodes and also fail to consider own capability information or service information of the UE itself. However, in a distributed network scenario, each distributed network node has a restricted and customized service area; in other words, distributed network nodes are heterogeneous, and capabilities provided by each distributed network node are differentiated. Moreover, the requirements of the UE for the network are no longer limited to the "connection" service, but may include new service requirements such as computing power services and AI services. For a 6G network, it can provide not only the "connection" service but also services such as "computing power" services, "computation" services and "data" services. As for UEs, UEs are also heterogeneous: for example, some UEs act as a computing power node, some have data service capabilities, and some may provide capabilities related to intelligence. Therefore, for UEs with different capabilities and/or different service requirements, it is necessary to have distributed network nodes that match the capability information and/or service information of the UE provide services. It may be a key challenge that how to select a distributed network node according to the requirements of the UE to achieve precision on-requirement service and maximized utilization of network resources.

To address above technical problems, embodiments of the present disclosure provide a method for selecting a network node, device, apparatus, system and computer-readable storage medium. A UE sends a first message to an access network device, wherein the first message includes UE capability information and/or UE service information; after receiving the first message, the access network device determines a first distributed network node in the distributed network based on the UE capability information and/or UE service information, and sends a registration request message to the first distributed network node; after receiving the registration request message, the first distributed network node determines a first target network node in the distributed network based on the UE capability information and/or UE service information, and sends a second message to the UE, wherein the second message includes attribute information of the first target network node; after receiving the second message, the UE accesses the first target network node according to the attribute information of the first target network node.

Since the first distributed network node is selected by the access network device based on the UE capability information and/or UE service information, and the first target network node is selected by the first distributed network node based on the UE capability information and/or UE service information, the first target network node accessed by the UE is selected on requirement by the access network device and the first distributed network node, thereby matching a suitable network node for the UE, and achieving accurate on-requirement service provided by network nodes and maximized utilization of network resources.

FIG. 2 is a schematic flowchart of a method for selecting a network node performed by a UE according to an embodiment of the present disclosure. The flow of the method for selecting the network node is described below from the perspective of the UE with reference to FIG. 2.

As shown in FIG. 2, the method for selecting the network node provided by an embodiment of the present disclosure mainly includes steps S101 to S103.

S101. Sending a first message to an AN device, wherein the first message includes UE capability information and/or UE service information, and the first message is configured to indicate the AN device to select a first distributed network node matching the UE capability information and/or the UE service information.

The first message is a registration request sent by the UE to the AN device, and the registration request includes the UE capability information and/or the UE service information.

UE capability refers to the capability possessed by the UE, for example, data service capability possessed by the UE, intelligence-related capability possessed by the UE, etc. UE capability information refers to relevant information used to characterize the capability possessed by the UE. Exemplarily, the UE capability information includes one or more of the following information: UE capability type, UE capability priority, UE capability usage time, and UE capability usage location; wherein the UE capability type includes one or more of the following: computing power, Artificial Intelligence (AI) model, AI algorithm, and data service.

UE service requirement refers to the requirement of the UE for services provided by the network. UE service information refers to relevant information used to characterize the requirement of the UE for services provided by the network. For example, the UE service information includes one or more of the following information: UE service type, UE service requirement priority, UE service requirement usage time, and UE service requirement usage location; wherein the UE service type includes one or more of the following: computing power service, computation service, and data service.

In a case that the UE only needs to access a network node matching the UE capability, the first message only includes the UE capability information; in a case that the UE only needs to access a network node matching the UE service requirement, the first message only includes the UE service information; in a case that the UE needs to access a network node matching both the UE capability and the UE service requirement, the first message includes both the UE capability information and the UE service information.

There are multiple distributed network nodes in the distributed network, and both the first distributed network node and the first target network node are distributed network nodes in the distributed network. Further, the first distributed network node refers to a distributed network node selected by the AN device from the multiple distributed network nodes that matches the UE capability information and/or the UE service information. The first target network node refers to a distributed network node selected by the first distributed network node from the multiple distributed network nodes that matches the UE capability information and/or the UE service information.

In the procedure that the UE applies for registration with the network, the UE encapsulates the UE capability information and/or the UE service information in AN parameters, encapsulates the UE capability information and/or the UE service information in a registration request message, and adds the AN parameters and the registration request message to the first message. The UE sends the first message to the AN device. After receiving the first message, the AN device selects a first distributed network node matching the UE capability information and/or the UE service information based on the UE capability information and/or the UE service information in the AN parameters. After selecting the first distributed network node, the AN device sends the registration request message to the first distributed network node. After receiving the registration request message, the first distributed network node selects a first target network node matching the UE capability information and/or the UE service information. After selecting the first target network node, the first distributed network node encapsulates attribute information of the first target network node in the second message. The first distributed network node sends the second message to the UE.

S102. Receiving a second message sent by the first distributed network node, wherein the second message includes attribute information of the first target network node.

The first target network node is a distributed network node selected by the first distributed network node that matches the UE capability information and/or the UE service information. Further, the first target network node may be the first distributed network node matching the UE capability information and/or the UE service information, or may be a second distributed network node that matches the UE capability information and/or the UE service information selected by the first distributed network node from other distributed network nodes in the distributed network.

After determining the first target network node, the first distributed network node encapsulates attribute information of the first target network node in a second message, and transparently sends the second message to the UE via the AN device.

The UE receives the second message sent by the first distributed network node, which mainly includes the following four cases.
(1) In a case that the first target network node is the first distributed network node, the UE receives a registration accept message sent by the first distributed network node, wherein the registration accept message includes attribute information of the first distributed network node.

When the first distributed network node determines, based on capability information and/or service information of the first distributed network node, that it can provide services for the UE, the first distributed network node may be determined as the first target network node. In the present case, the first distributed network node encapsulates its own attribute information in the registration accept message, and transparently sends the registration accept message to the UE via the AN device. The UE receives the registration accept message sent transparently via the AN device.

(2) In a case that the first target network node is a second distributed network node, the UE receives a registration accept message sent by the first distributed network node, wherein the registration accept message includes attribute information of the second distributed network node. The second distributed network node is determined by the first distributed network node based on the UE capability information and/or the UE service information.

When the first distributed network node determines, based on its own capability information and/or its own service information, that it cannot provide services for the UE, the first distributed network node re-selects, from other distributed network nodes in the distributed network, a second distributed network node that can provide services for the UE as the first target network node. In the present case, the first distributed network node encapsulates attribute information of the second distributed network node in the registration accept message, and transparently sends the registration accept message to the UE via the AN device. The UE receives the registration accept message transparently sent via the AN device.

(3) In a case that the first target network node is a second distributed network node, the UE receives a UE policy message sent by the first distributed network node, wherein the UE policy message includes attribute information of the second distributed network node. The second distributed network node is determined by the first distributed network node based on the UE capability information and/or the UE service information.

When the first distributed network node determines, based on its own capability information and/or its own service information, that it cannot provide services for the UE, the first distributed network node re-selects, from other distributed network nodes in the distributed network, a second distributed network node that can provide services for the UE as the first target network node.

The first distributed network node transparently sends a registration accept message to the UE via the AN device, and the registration accept message does not include attribute information of the first target network node. After receiving the registration accept message, the UE determines that the first distributed network node has accepted the registration request from the UE. Then, the first distributed network node encapsulates attribute information of the second distributed network node in the UE Policy message, and transparently sends the UE Policy message to the UE via the AN device. The UE Policy message may be a user equipment routing selection policy (URSP) message. That is, the attribute information of the second distributed network node is encapsulated in the URSP message, and the first distributed network node sends the attribute information of the second distributed network node through the URSP message.

After receiving the UE policy message, the UE updates the UE policy based on the UE policy message, and sends a response message corresponding to the UE policy message to the first target network node in the case that the UE supports processing of the UE policy.

In a specific implementation, since attribute information of the second distributed network node that allows the UE to access needs to be added, a Policy Control Function (PCF) entity in the first distributed network node may be triggered to determine update of the UE policy. The PCF entity encapsulates the attribute information of the second distributed network node in the UE policy message, and sends the UE policy message to an Authentication Management Function (AMF) entity. The AMF entity transparently sends the UE policy message to the UE. After receiving the UE policy provided by the PCF entity, the UE supports processing the newly added attribute information of the second distributed network node, and sends a result indicating whether processing is supported to the AMF entity. The AMF entity sends a response message to the PCF entity.

(4) In a case that the first target network node is a second distributed network node, the UE receives a UE configuration update command message sent by the first distributed network node, wherein the UE configuration update command message includes attribute information of the second distributed network node. The second distributed network node is determined by the first distributed network node based on the UE capability information and/or the UE service information.

When the first distributed network node determines, based on its own capability information and/or its own service information, that it cannot provide services for the UE, the first distributed network node re-selects, from other distributed network nodes in the distributed network, the second distributed network node that can provide services for the UE as the first target network node.

The first distributed network node transparently sends a registration accept message to the UE via the AN device, and the registration accept message does not include attribute information of the first target network node. After receiving the registration accept message, the UE determines that the first distributed network node has accepted the registration request from the UE. Then, the first distributed network node encapsulates attribute information of the second distributed network node in a UE configuration update command message, and transparently sends the UE configuration update command message to the UE via the AN device.

After receiving the UE configuration update command message, the UE performs configuration update according to the UE configuration update command; In the case that the configuration update succeeds, the UE sends a configuration update success message to the first target network node.

In a specific implementation, the AMF entity decides to initiate change of the UE configuration for causes including a change in the accessible distributed network nodes of the UE. The AMF entity sends the UE configuration update command message to the UE, including parameters such as a configuration update indication and attribute information of the second distributed network node that is accessible. After the US in configured successfully, the UE returns a completion confirmation message.

S103. Accessing the first target network node according to the attribute information of the first target network node.

After receiving the second message, the UE parses the attribute information of the first target network node from the second message, and accesses the first target network node according to the attribute information of the first target network node. In a case that the first target network node is the first distributed network node, the UE accesses the first distributed network node; in a case that the first target network node is the second distributed network node, the UE accesses the second distributed network node.

In a possible implementation, after the UE accesses the first target network node, the UE may establish a service with the first target network node. Specifically, the UE sends a service requirement request message to the first target network node; the service requirement request message is configured to indicate the first target network node to determine a second target network node based on UE activation capability and/or UE service information, and the second target network node is configured to provide network services for the UE.

The UE activation capability and/or the UE service information are encapsulated in the service requirement request message; or, the UE activation capability and/or the UE service information are stored in the first target network node.

In a case that the second target network node is the first target network node, the first target network node is configured to provide network services for the UE; in a case that the second target network node is a third distributed target network node, the third distributed network node provides network services for the UE by cooperating with the first target network node, wherein the third distributed network node is a network node having a cooperative relationship with the first target network node.

When the UE capability is activated or there is a service requirement request, the UE sends the service requirement request message to the first target network node, wherein the service requirement request message includes information such as a UE identity and a UE service identity. After the first target network node receives the service requirement request message from the UE, if the service requirement request message includes UE activation capability or UE service information, the first target network node determines whether the first target network node can meet current UE requirement. If the first target network node can meet current UE requirement, the first target network node itself provides network services for the UE; if the first target network node cannot meet current UE requirement, the second target network node provides network services for the UE in a cooperative manner.

In a possible embodiment, after the UE accesses the first target network node, the UE capability information and/or UE service information of the UE may be updated over time or with the environment. In the present case, the UE sends an update request message to the first target network node, wherein the update request message includes updated UE capability information and/or updated UE service information. The update request message is configured to indicate the first target network node to select a third target network node matching the updated UE capability information and/or updated UE service information. The UE receives a third message sent by the first target network node, wherein the third message includes attribute information of the third target network node, and accesses the third target network node based on the attribute information of the third target network node.

The third target network node is a distributed network node re-selected by the first target network node based on the updated UE capability information and/or updated UE service information.

In embodiments of the present disclosure, when the UE capability information and/or the UE service information is updated, the UE sends the update request message to the first target network node, wherein the update request message carries the updated UE capability information and/or the updated UE service information. After receiving the update request message, the first target network node selects the third target network node matching the updated UE capability information and/or the updated UE service information based on the updated UE capability information and/or the updated UE service information.

The first target network node sends attribute information of the third target network node to the UE, and the UE re-accesses the third target network node according to the attribute information of the third target network node.

It should be noted that The procedure for the UE to receive the third message sent by the first target network node is the same as The procedure for the UE to receive the second message sent by the first distributed network node. Reference may be made to the description in the foregoing embodiments, and details are not described herein again in the embodiments of the present disclosure.

It should be noted that after the UE updates the UE capability information and/or the UE service information, the UE may access the third target network node. The procedure for the UE to perform service requirement with the third target network node is the same as The procedure for the UE to perform service requirement with the first target network node, and reference may be made to the description in the foregoing embodiments.

FIG. 3 is a schematic flowchart of a method for selecting a network node performed by an AN device according to an embodiment of the present disclosure. The flow of the method for selecting the network node from the perspective of the AN device in the embodiments of the present disclosure is described below with reference to FIG. 3.

As shown in FIG. 3, the method for selecting the network node provided by an embodiment of the present disclosure mainly includes steps S201 to S203.

S201. Receiving a first message sent by a UE, wherein the first message includes UE capability information and/or UE service information.

UE capability refers to the capability possessed by the UE, for example, data service capability possessed by the UE, intelligence-related capability possessed by the UE, etc. UE capability information refers to relevant information used to characterize the capability possessed by the UE. For example, the UE capability information includes one or more of the following information: UE capability type, UE capability priority, UE capability usage time, and UE capability usage location; wherein the UE capability type includes one or more of the following: computing power, Artificial Intelligence (AI) model, AI algorithm, and data service.

UE service information refers to the requirement of the UE for services provided by the network. UE service information refers to relevant information used to characterize the requirement of the UE for services provided by the network. For example, the UE service information includes one or more of the following information: UE service type, UE service requirement priority, UE service requirement usage time, and UE service requirement usage location; wherein the UE service type includes one or more of the following: computing power service, computation service, and data service.

The first message includes AN parameters and a registration request message, and the AN parameters include a registration cause, as well as the UE capability information and/or the UE service information. The registration request message includes: a registration type, a UE identity, and the UE capability information and/or the UE service information. The registration cause is used to indicate to the AN device the cause why the UE requests to access the network.

In the procedure that the UE applies for registration with the network, the UE sends the first message to the AN device, and the AN device receives the first message sent by the UE. Specifically, in the procedure that the UE applies for registration with the network, the UE sends a registration request to the AN device, and the AN device receives the registration request sent by the UE, wherein the registration request includes the AN parameters and the registration request message.

S202. Determining a first distributed network node in the distributed network based on the UE capability information and/or the UE service information.

After receiving the AN parameters, the AN device selects the first distributed network node from the distributed network based on the UE capability information and/or the UE service information in the AN parameters. The AN device may obtain or locally store configuration information of each distributed network node in the distributed network. The configuration information includes capability information possessed by the distributed network node and service information provided by the distributed network node.

Cases in which the AN device determines the first distributed network node include the following three:
(1) The AN device selects, from the distributed network, a first distributed network node that matches the UE capability information

The AN device may obtain capability information of each distributed network node in the distributed network. The AN device matches the capability information of a distributed network node with the UE capability information. If the matching succeeds, the distributed network node is determined as the first distributed network node. If the matching fails, the AN device matches the capability information of other distributed network nodes in the distributed network with the UE capability information until the capability information of a distributed network node successfully matches the UE capability information, and the distributed network node is determined as the first distributed network node.

For example: If the UE capability type included in the UE capability information is an intelligence-related capability, and the distributed network node has the intelligence-related capability, the matching succeeds. If the UE capability type included in the UE capability information is an intelligence-related capability, and the distributed network node does not have the intelligence-related capability, the matching fails.

For another example: If the UE capability priority included in the UE capability information is high priority, and the capability priority of the distributed network node is high priority, the matching succeeds. If the UE capability priority included in the UE capability information is high priority, and the capability priority of the distributed network node is low priority, the matching fails.

For another example: If the UE capability usage location included in the UE capability information is Location A, and the capability usage location of the distributed network node is Location A, the matching succeeds. If the UE capability usage location included in the UE capability information is Location A, and the capability usage location of the distributed network node is Location B, the matching fails.

For another example: If the UE capability usage time included in the UE capability information is 8:00 p.m. to 10:00 p.m., and the capability usage time of the distributed network node is 8:00 p.m. to 10:00 p.m., the matching succeeds. If the UE capability usage time included in the UE capability information is 8:00 p.m. to 10:00 p.m., and the capability usage time of the distributed network node is 8:00 a.m. to 10:00 a.m., the matching fails.

It should be noted that since the UE capability information includes multiple pieces of information, the capability information of the distributed network node is determined to match the UE capability successfully only if all items in the capability information of the distributed network node matches respective items in the UE capability information. If any item in the capability information of the distributed network node fails to match respective item in the UE capability information, the capability information of the distributed network node is determined to fail to match the UE capability information.

(2) The AN device selects, from the distributed network, the first distributed network node that matches the UE service information.

The AN device may obtain service information provided by each distributed network node in the distributed network. The AN device matches the service information provided by a distributed network node with the UE service information. If the matching succeeds, the distributed network node is determined as the first distributed network node. If the matching fails, the AN device matches the service information of other distributed network nodes in the distributed network with the UE service information until the service information of a distributed network node successfully matches the UE service information, and the distributed network node is determined as the first distributed network node.

For example: If the UE service type included in the UE service information is a computation service, and the distributed network node can provide the computation service, the matching succeeds. If the UE service type included in the UE service information is computation service, and the distributed network node cannot provide the computation service, the matching fails.

For another example: If the UE service requirement priority included in the UE service information is high priority, and the service priority of the distributed network node is high priority, the matching succeeds. If the UE service requirement priority included in the UE service information is high priority, and the service priority of the distributed network node is low priority, the matching fails.

For another example: If the UE service requirement usage location included in the UE service information is Location A, and the service usage location of the distributed network node is Location A, the matching succeeds. If the UE service requirement usage location included in the UE service information is Location A, and the service usage location of the distributed network node is Location B, the matching fails.

For another example: If the UE service requirement usage time included in the UE service information is 11:00 p.m. to 12:00 a.m., and the capability usage time of the distributed network node is 11:00 p.m. to 12:00 a.m., the matching succeeds. If the UE service requirement usage time included in the UE service information is 11:00 p.m. to 12:00 a.m., and the capability usage time of the distributed network node is 8:00 a.m. to 10:00 a.m., the matching fails.

It should be noted that since the UE service information includes multiple pieces of information, the capability information of the distributed network node is determined to match the UE service information successfully only if all items in the capability information of the distributed network node matches all respective items in the UE service information. If any item in the capability information of the distributed network node fails to match respective item in the UE service information, the capability information of the distributed network node is determined to fail to match the UE service information.

(3) The AN device selects, from the distributed network, thhe first distributed network node that matches both the UE capability information and the UE service information.

In a case that the AN parameters include both the UE capability information and the UE service information, the AN device selects, from the distributed network, the first distributed network node that matches both the UE capability information and the UE service information. The first distributed network node only selected by this method can meet the requirements.

It should be noted that embodiments of the present disclosure provide a method for the AN device to select the first distributed network node based on the UE capability information and/or the UE service information. In an actual environment, the AN device may also select the first distributed network node according to other parameters (e.g., UE identity) or other policies.

S203. Sending a registration request message to the first distributed network node, wherein the registration request message includes the UE capability information and/or the UE service information, and the registration request message is configured to indicate the first distributed network node to select a first target network node matching the UE capability information and/or the UE service information.

After determining the first distributed network node, the AN device sends the registration request message to the first distributed network node, wherein the registration request message includes the UE capability information and/or the UE service information. After receiving the registration request message, the first distributed network node selects the first target network node matching the UE capability information and/or the UE service information. The first distributed network node sends attribute information of the first target network node to the UE, and the UE may access the first target network node according to the attribute information.

Further, after determining the first distributed network node, the AN device also sends a UE location to the first distributed network node, causing that the first distributed network node may obtain current location of the UE.

In embodiments of the present disclosure, after receiving the first message, the AN device selects, from the distributed network, the first distributed network node matching the UE capability information and/or the UE service information, and sends the registration request message to the first distributed network node. Since the first distributed network node is selected by the access network device based on the UE capability information and/or the UE service information, thereby matching a suitable network node for the UE, and achieving accurate on-requirement service provided by network nodes and maximized utilization of network resources.

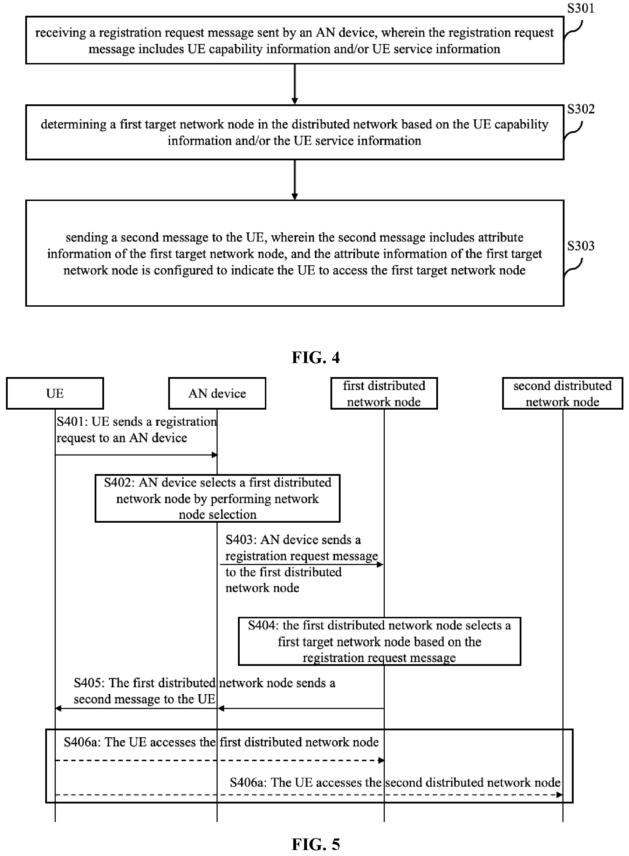

FIG. 4 is a schematic flowchart of a method for selecting a network node performed by a distributed network node according to an embodiment of the present disclosure. The flow of the method for selecting the network node from the perspective of the first distributed network node in the embodiments of the present disclosure is described below with reference to FIG. 4. The first distributed network node is a network node selected by the AN device from the distributed network that matches the UE capability information and/or the UE service information.

As shown in FIG. 4, the method for selecting te network node provided by an embodiment of the present disclosure mainly includes steps S301 to S303.

S301. Receiving a registration request message sent by an AN device, wherein the registration request message includes UE capability information and/or UE service information.

After the AN device selects, from the distributed network, the first distributed network node matching the UE capability information and/or the UE service information, the AN device sends thhe registration request message to the first distributed network node, wherein the registration request message includes the UE capability information and/or the UE service information.

S302. Determining a first target network node in the distributed network based on the UE capability information and/or the UE service information.

The first target network node refers to a distributed network node selected by the first distributed network node that matches the UE capability information and/or the UE service information, wherein the first target network node is a network node that allows the UE to access.

After receiving the registration request message, the first distributed network node determines whether the first distributed network node itself can serve the UE. If the first distributed network node can provide services for the UE, the first distributed network node may be determined as the first target network node and allow the UE to access. If the first distributed network node itself cannot provide services for the UE, the first distributed network node may select a second distributed network node from anothe distributed network node in the distributed network that can provide services for the UE as the first target network node, and the UE may be allowed to access the second distributed network node.

In one implementation, the first distributed network node performs matching processing between own information and/or service information of the first distributed network node and the UE capability information and/or the UE service information. If the matching succeeds, the first distributed network node is determined as the first target network node.

The procedure in which the first distributed network node performs matching processing between own information and the UE capability information of the first distributed network node and/or the UE service information is the same as the procedure in which the AN device performs matching processing between the capability information and/or service information of a distributed network node and the UE capability information and/or the UE service information. For details, reference may be made to the description in the foregoing embodiments.

In another implementation, if the matching between the capability information and/or service information of the first distributed network node and the UE capability information and/or the UE service information fails, the first distributed network node performs matching processing between the capability information and/or service information of other distributed network nodes in the distributed network and the UE capability information and/or the UE service information, and determines the second distributed network node with successful matching as the first target network node.

The procedure in which the first distributed network node performs matching processing between the capability information and/or service information of other distributed network nodes in the distributed network and the UE capability information and/or the UE service information is the same as the procedure in which the AN device performs matching processing between the capability information and/or service information of a distributed network node and the UE capability information and/or the UE service information. For details, reference may be made to the description in the foregoing embodiments.

S303. Sending a second message to the UE, wherein the second message includes attribute information of the first target network node, and the attribute information of the first target network node is configured to indicate the UE to access the first target network node.

After determining the first target network node, the first distributed network node may encapsulate the attribute information of the first target network node in the second message, and send the second message to the UE.

The first distributed network node sends the second message to the UE, which mainly includes the following four cases:
(1) In the case that the first distributed network node is the first target network node, the first distributed network node sends a registration accept message to the UE. The registration accept message includes the attribute information of the first distributed network node, wherein the attribute information of the first distributed network node is used to indicate the UE to access the first distributed network node.
(2) In the case that the second distributed network node is the first target network node, the first distributed network node sends a registration accept message to the UE. The registration accept message includes the attribute information of the second distributed network node, wherein the attribute information of the second distributed network node is used to indicate the UE to access the second distributed network node.
(3) In the case that the second distributed network node is the first target network node, the first distributed network node sends a UE policy message to the UE. The UE policy message includes the attribute information of the second distributed network node, wherein the attribute information of the second distributed network node is used to indicate the UE to access the second distributed network node.
(4) In the case that the second distributed network node is the first target network node, the first distributed network node sends a UE configuration update command message to the UE. The UE configuration update command message includes the attribute information of the second distributed network node, wherein the attribute information of the second distributed network node is used to indicate the UE to access the second distributed network node.

The detailed descriptions of the four cases can refer to the descriptions of the UE side, and will not be repeated in the embodiments of the present disclosure.

In the following embodiments, when the first distributed network node is determined as the first target network node, the procedure of the service requirement request and the procedure of the update request on the network side are introduced.

After the UE accesses the first target network node according to the attribute information of the first target network node, the UE may establish a service with the first target network node.The UE sends the service requirement request message to the first target network node. The first target network node receives the service requirement request message sent by the UE; obtains UE activation capability and/or UE service information; and in response to an indication of the service requirement request message, determines a second target network node according to the UE activation capability and/or the UE service information, wherein the second target network node is configured to provide a network service for the UE.

In the case that the service requirement request message includes the UE activation capability and/or the UE service information, the first target network node may obtain the UE activation capability and/or the UE service information included in the service requirement request message; in the case that the service requirement request message does not include the UE activation capability and/or the UE service information, the first target network node may obtain the UE activation capability and/or the UE service information already stored in the first target network node.

In one implementation, the first target network node determines whether capability information and/or service information of the first target network node satisfy the UE activation capability and/or the UE service information. If capability information and/or service information of the first target network node satisfy the UE activation capability and/or the UE service information, the first target network node is determined as the second target network node, and the first target network node provides the network service for the UE.

In another implementation, if the capability information and/or service information of the first target network node do not satisfy the UE activation capability and/or the UE service information, a third distributed network node having a cooperative relationship with the first target network node is determined as the second target network node, wherein the third distributed network node provides the network service for the UE by cooperating with the first target network node.

When the UE capability is activated or there is the service requirement request, the UE sends the service requirement request message to the first target network node, wherein the service requirement request message includes information such as a UE identifier and a UE service identifier.After the first target network node receives the service requirement request message from the UE, if the service requirement request message includes the UE activation capability or the UE service information, the first target network node determines whether the first target network node can meet the UE requirement. If the first target network node can meet the UE requirement, the first target network node may provide services for the UE; if the first target network node cannot meet the UE requirement, the second target network node may provide service for the UE through cooperation.

It may mainly include the following three cases that the second target network node provides services for the UE.
(1) The capability information and/or service information of the first target network node include: the capability priority being served by the first target network and/or the service requirement priority being served by the first target network; the UE activation capability and/or the UE service information include: the UE activation capability priority and/or the UE service requirement priority. The case that the capability information and/or service information of the first target network node cannot satisfy the UE activation capability and/or the UE service information includes: the capability priority being served and/or the service requirement priority being served by the first target network node being higher than the UE activation capability priority and/or the UE service requirement priority.
   The first target network node is providing services for high-priority capabilities or high-priority service requirements and selects a corresponding distributed network node. If the service corresponding to the service requirement request sent by the UE to the first target network node is in a low-priority scenario, the first target network node can migrate the service to a cooperating second network node through cooperation between distributed network nodes for providing services.
(2) The capability information and/or service information of the first target network node include: the capability usage time being served by and/or the service requirement usage time being served; the first target network. The UE activation capability and/or the UE service information include: the UE activation capability usage time and/or the UE service requirement usage time. The case that the capability information and/or service information of the first target network node cannot satisfy the UE activation capability and/or the UE service information includes: the capability usage time being served and/or the service requirement usage time being served by the first target network node is longer than the UE activation capability usage time and/or the UE service requirement usage time.
   The first target network node is providing services for capabilities or service requirements with a long usage time and selects a corresponding distributed network node. If the service corresponding to the service requirement request sent by the UE to the first target network node is in a short usage time scenario, the first target network node can migrate the service to a cooperating second network node through cooperation between distributed network nodes for providing services.
(3) The capability information and/or service information of the first target network node include: the capability usage location being served and/or the service requirement usage location being served by the first target network. The UE activation capability and/or the UE service information include: the UE activation capability usage location and/or the UE service requirement usage location. The case that the capability information and/or service information of the first target network node cannot satisfy the UE activation capability and/or the UE service information includes: the capability usage location being served and/or the service requirement usage location being served by the first target network node is the same as the UE activation capability usage location and/or the UE service requirement usage location.

The first target network node is providing services for capabilities or service requirements whose usage location is the current location and selects a corresponding distributed network node. At current moment, for the service corresponding to the service requirement request sent by the UE to the first target network node, the first target network node can migrate the service to a cooperating second network node through cooperation between distributed network nodes for providing services.

After the UE accesses the first target network node, the UE capability information and/or UE service information of the UE may be updated over time or with the environment. In the present case, the UE sends an update request message to the first target network node. The first target network node receives the update request message sent by the UE. The update request message includes updated UE capability information and/or updated UE service information.The first target network node determines a third target network node based on the updated UE capability information and/or the updated UE service information. The first target network node sends a third message to the UE, wherein the third message includes attribute information of the third target network node, and the attribute information of the third target network node is used to indicate the UE to access the third target network node.

The procedure of the first target network node determining the third target network node based on the updated UE capability information and/or the updated UE service information is the same as the procedure of the first distributed network node determining the first target network node based on the UE capability information and/or the UE service information. For details, reference may be made to the descriptions in the foregoing embodiments.

It should be noted that the procedure of the third target network node sending the third message to the UE is the same as the procedure of the first target network node sending the second message to the UE. For details, reference may be made to the descriptions in the foregoing embodiments, which will not be repeated in the embodiments of the present disclosure.

It should be noted that after updating the UE capability information and/or the UE service information, the UE may access the third target network node. The procedure of the UE performing service requirement with the third target network node is the same as procedure of the UE performing service requirement with the first target network node. For details, reference may be made to the descriptions in the foregoing embodiments.

When the second distributed network node is determined as the first target network node, the procedure of the service requirement request and the procedure of the update request performed by the network side are the same as those performed by the network side when the first distributed network node is determined as the first target network node. For details, reference may be made to the descriptions in the foregoing embodiments, which will not be repeated in the embodiments of the present disclosure.

In a specific implementation, an interaction method for selecting a network node during a registration procedure is provided. As shown in FIG. 5, the interaction method for selecting theh network node during the registration procedure mainly includes the following steps:
S401. The UE sends a registration request to an AN device.

The information carried in the registration request includes AN parameters and a Registration Request message. The AN parameters include information such as a registration cause, UE capability information and/or UE service requirement; the Registration Request message includes a registration type, a UE identifier, UE capability information and/or UE service requirement; the UE capability information includes a capability type list (including but not limited to computing power, AI model, AI algorithm, data service, etc.), UE capability priority, UE capability usage time, UE capability usage location, etc.; the UE service information includes a UE service requirement type (including but not limited to computing power, computation, data service, etc.), UE service requirement priority, UE service requirement usage time, UE service requirement usage location, etc.

S402. The AN device selects a first distributed network node by performing network node selection.

Since the AN parameters include the UE capability information and/or the UE service requirement, the AN device selects the first distributed network node matching the UE capability information and/or the UE service requirement. For a detailed selection method, reference may be made to the descriptions in the foregoing embodiments.

S403. The AN device sends a registration request message to the first distributed network node.

After the AN device selects the first distributed network node, the AN device sends a registration request to the first distributed network node, wherein the registration request includes the Registration Request message, UE location and other information.

S404. The first distributed network node selects a first target network node based on the registration request message.

After the first distributed network node receives the registration request, since the registration request includes the UE capability information and/or the UE service information, the first distributed network node determines whether capability and/or the services of the first distributed network node can satisfy the UE capability information and/or the UE service requirement. If the capability and/or the services of the first distributed network node can satisfy the UE capability information and/or the UE service requirement, it indicates that the first distributed network node can provide services for the UE, and the first distributed network node is determined as the first target network node to provide services for the UE.

If the capability and/or the services of the first distributed network node cannot satisfy the UE capability information and/or the UE service requirement, a second distributed network node matching the UE capability information and/or the UE service requirement is selected from other distributed network nodes in the distributed network as the first target network node to provide services for the UE.

S405. The first distributed network node sends a second message to the UE.

After determining the first target network node, the first distributed network node encapsulates the attribute information of the first target network node in the second message, and sends the second message to the UE, so that the UE can receive the attribute information of the first target network node.

The UE accesses the first target network node based on the attribute information of the first target network node.

It should be noted that either step S406a or S406b is performed according to actual situations. Step S406a is performed when the first target network node is the first distributed network node, and step S406b is performed when the first target network node is the second distributed network node.

S406a. The UE accesses the first distributed network node.

When the first target network node is the first distributed network node, the second message includes the attribute information of the first distributed network node, and the UE accesses the first distributed network node based on the attribute information of the first distributed network node.

S406b. The UE accesses the second distributed network node.

When the first target network node is the second distributed network node, the second message includes the attribute information of the second distributed network node, and the UE accesses the second distributed network node based on the attribute information of the second distributed network node.

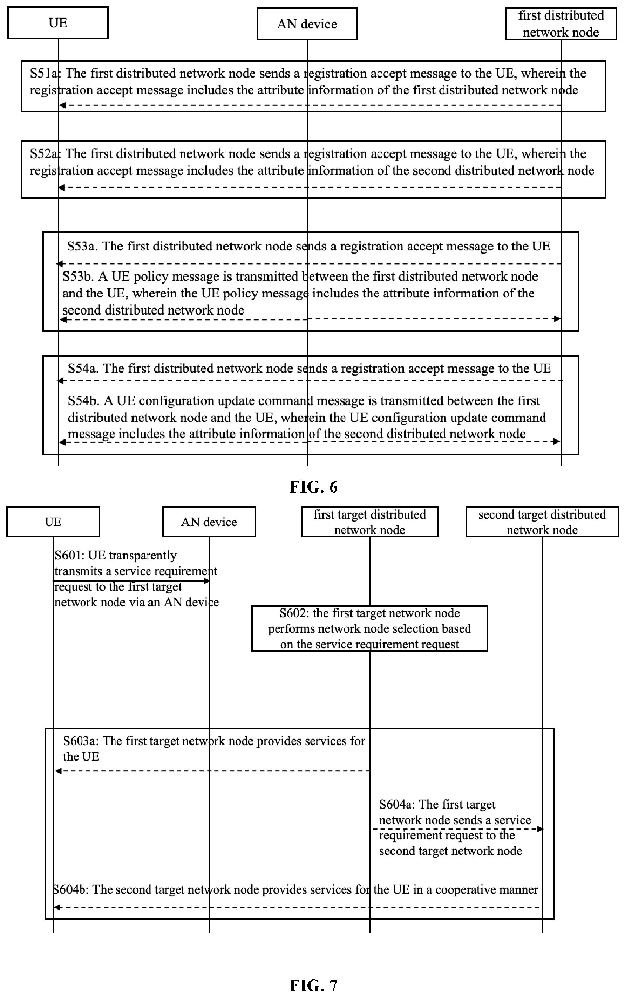

As shown in FIG. 6, the first distributed network node sends the second message to the UE mainly in four methods.

In the case that the first target network node is the first distributed network node, the first method for sending the second message, which includes step S51a.

S51a. The first distributed network node sends a registration accept message to the UE, wherein the registration accept message includes the attribute information of the first distributed network node.

In the case that the first target network node is the second distributed network node, any one of the following three methods is selected for execution.

The second method for sending the second message includes step S52a.

S52a. The first distributed network node sends a registration accept message to the UE, wherein the registration accept message includes the attribute information of the second distributed network node.

The third method for sending the second message includes steps S53a and S53b.

S53a. The first distributed network node sends a registration accept message to the UE.

S53b. A UE policy message is sent between the first distributed network node and the UE, wherein the UE policy message includes the attribute information of the second distributed network node.

The fourth method for sending the second message includes steps S54a and S54b.

S54a. The first distributed network node sends a registration accept message to the UE.

S54b. A UE configuration update command message is sent between the first distributed network node and the UE, wherein the UE configuration update command message includes the attribute information of the second distributed network node.

Further, an interaction method for selecting a network node during a procedure of a service requirement request is provided. As shown in FIG. 7, the interaction method for selecting the network node during the procedure of the service requirement request mainly includes the following steps:
S601. The UE transparently sends a service requirement request to the first target network node via an AN device.

When the UE capability is activated or there is a service requirement request, the UE sends the service requirement request message to the first target network node. The service requirement request message includes a UE identifier, a UE service requirement identifier, UE activation capability, UE service request information, and the like.

S602. The first target network node performs network node selection based on the service requirement request.

After the first target network node receives the service requirement request message from the UE, if the service requirement request message includes the UE activation capability or the UE service information, the first target network node determines whether the first target network node can satisfy the current UE service requirement. If the first target network node can satisfy the current UE service requirement, step S603a is performed. If the first target network node cannot satisfy the current UE service requirement, steps S604a and S604b are performed.

S603a. The first target network node provides services for the UE.

When the first target network node itself can satisfy the current UE service requirement, the first target network node provides services for the UE.

S604a. The first target network node sends a service requirement request to the second target network node.

S604b. The second target network node provides services for the UE in a cooperative manner.

When the first target network node itself cannot satisfy the current UE service requirement, the first target network node sends a service requirement request to the second target network node, and the second target network node provides services for the UE in a cooperative manner.

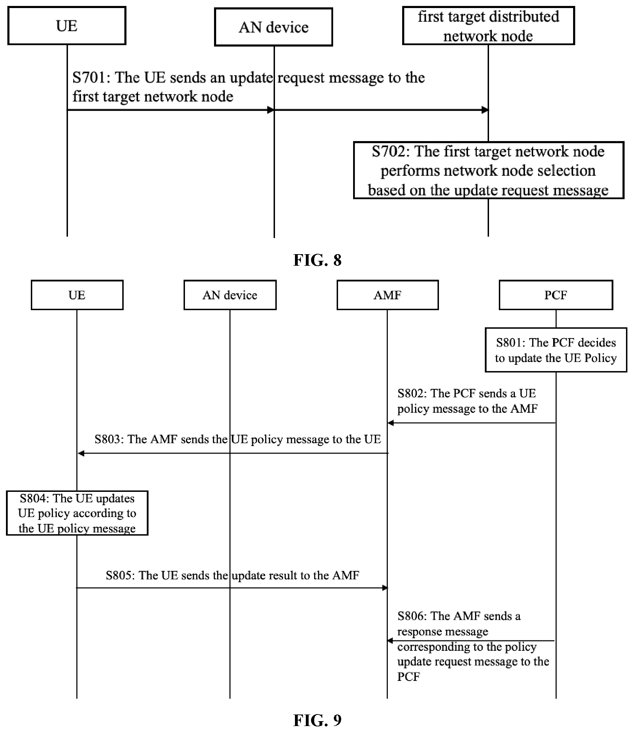

In a specific implementation, an interaction method for selecting a network node during a procedure of an update request is provided. As shown in FIG. 8, the interaction method for selecting the network node during the procedure of the update request mainly includes the following steps:
S701. The UE sends an update request message to the first target network node.

When the UE capability information and/or the UE service information of the UE is updated, the UE sends an update request message to the first target network node, wherein the update request message includes the updated UE capability information and/or the updated UE service information.

S702. The first target network node performs network node selection based on the update request message.

After the first target network node receives the update request message, the first target network node selects a third target network node matching the updated UE capability information and/or the updated UE service information based on the updated UE capability information and/or the updated UE service information.

Other interaction procedures between the UE and the first target network node are the same as the interaction procedures between the UE and the first distributed network node in the foregoing embodiments. For details, reference may be made to the descriptions in the foregoing embodiments, and no detailed definition is provided in this embodiment.

In a specific implementation, a method for carrying attribute information in a UE policy message is provided, as shown in FIG. 9.

S801. The PCF decides to update the UE Policy.

When it is necessary to add/update attribute information of the network nodes, which are available for the UE, or a UE policy update request message (i.e., network node attribute update information) is received, the PCF is triggered to update the UE Policy.

S802. The PCF sends a UE policy message to the AMF.

S803. The AMF sends the UE policy message to the UE.

The attribute information of the network nodes, which are available, is encapsulated in the UE Policy message, and the UE Policy message is sent to the UE transparently through the AN device. The UE Policy message may be a URSP message.

S804. The UE updates UE policy according to the UE policy message.

S805. The UE sends the update result to the AMF.

After receiving the UE policy, the UE updates the UE policy based on the UE policy message. In the case that the UE supports processing the UE policy, the UE sends the update result to the first target network node.

S806. The AMF sends a response message corresponding to the policy update request message to the PCF.

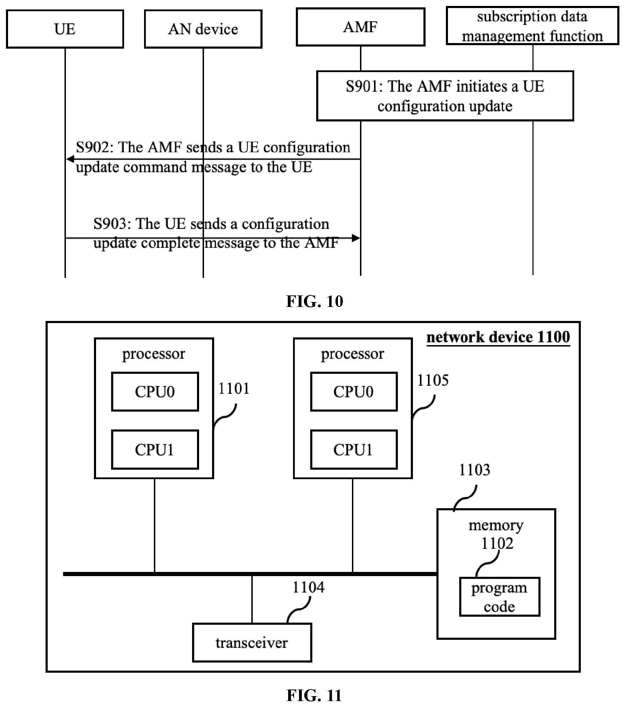

In a specific implementation, a method for carrying attribute information in a UE policy message is provided, as shown in FIG. 10.

S901. The AMF initiates a UE configuration update.

The AMF initiates the UE configuration update when the distributed network nodes accessible to the UE are changed.

S902. The AMF sends a UE configuration update command message to the UE.

The AMF sends the UE configuration update command message to the UE. The UE configuration update command message includes parameters such as a configuration update indication and attribute information of accessible distributed network nodes.

S903. The UE sends a configuration update complete message to the AMF.

After receiving the UE configuration update command message, the UE performs configuration update according to the UE configuration update indication. If the configuration update succeeds, the UE sends the configuration update success message to the first target network node.

Referring to FIG. 11, FIG. 11 shows a schematic structural diagram of a network device 1100 provided by an embodiment of the present disclosure. The network device 1100 shown in FIG. 11 is configured to perform operations involved in the method for selecting the network node. The network device 1100 is, for example, an AN device, a first distributed network node, a UE, or the like.

As shown in FIG. 11, the network device 1100 includes at least one processor 1101, a memory 1103, and at least one transceiver 1104.

The processor 1101 is, for example, a general-purpose central processing unit (CPU), a digital signal processor (DSP), a network processor (NP), a graphics processing unit (GPU), a neural-network processing unit (NPU), a data processing unit (DPU), a microprocessor, or one or more integrated circuits configured to implement the solutions of the present disclosure. For example, the processor 1101 includes an application-specific integrated circuit (ASIC), a programmable logic device (PLD), or other programmable logic devices, transistor logic devices, hardware components, or any combination thereof. The PLD is, for example, a complex programmable logic device (CPLD), a field-programmable gate array (FPGA), a generic array logic (GAL), or any combination thereof. It can implement or execute various logical blocks, modules, and circuits described in connection with the content disclosed in the embodiments of the present disclosure. The processor may also be a combination implementing computing functions, for example, a combination including one or more microprocessors, a combination of a DSP and a microprocessor, and the like.

Alternatively, the network device 1100 further includes a bus. The bus is used to transfer information among various components of the network device 1100. The bus may be a Peripheral Component Interconnect (PCI) bus, an Extended Industry Standard Architecture (EISA) bus, or the like. The bus may be divided into an address bus, a data bus, a control bus, and the like. For ease of representation, the bus is represented through only one thick line in FIG. 11, which does not mean that there is only one bus or only one type of bus. The components of the network device 1100 in FIG. 11 may be connected by other means besides the bus, and the embodiments of the present disclosure do not limit the connection manner of the components.

The memory 1103 is, for example, a read-only memory (ROM) or another type of static storage device that can store static information and instructions, or a random access memory (RAM) or another type of dynamic storage device that can store information and instructions, or an electrically erasable programmable read-only memory (EEPROM), a compact disc read-only memory (CD-ROM), or another optical disc storage, optical disk storage (including compact disc, laser disc, optical disc, digital versatile disc, Blu-ray disc, etc.), magnetic disk storage medium, or another magnetic storage device, or any other medium that can carry or store desired program code in the form of instructions or data structures and that can be accessed by a computer, but is not limited thereto. The memory 1103 may exist independently and be connected to the processor 1101 via a bus. The memory 1103 may also be integrated with the processor 1101.

The transceiver 1104 adopts any transceiver device, which is configured to communicate with other devices or communication networks. The communication network may be an Ethernet, a Radio Access Network (RAN), a Wireless Local Area Network (WLAN), or the like. The transceiver 1104 may include a wired communication interface and may also include a wireless communication interface. Specifically, the transceiver 1104 may be an Ethernet interface, a Fast Ethernet (FE) interface, a Gigabit Ethernet (GE) interface, an Asynchronous Transfer Mode (ATM) interface, a Wireless Local Area Network (WLAN) interface, a cellular network communication interface, or a combination thereof. The Ethernet interface may be an optical interface, an electrical interface, or a combination thereof. In embodiments of the present disclosure, the transceiver 1104 may be used for communication between the network device 1100 and other devices.

In a specific implementation, as an embodiment, the processor 1101 may include one or more CPUs, such as CPU0 and CPU1 as shown in FIG. 11. Each of these processors may be a single-CPU processor or a multi-CPU processor. The processor herein may refer to one or more devices, circuits, and/or processing cores for processing data (e.g., computer program instructions).

In a specific implementation, as an embodiment, the network device 1100 may include multiple processors, such as the processor 1101 and the processor 1105 as shown in FIG. 11. Each of these processors may be a single-CPU processor or a multi-CPU processor. The processor herein may refer to one or more devices, circuits, and/or processing cores for processing data (e.g., computer program instructions).

In a specific implementation, as an embodiment, when the network device 1100 is a UE, the network device may further include an output device and an input device. The output device communicates with the processor 1101 and can display information in various ways. For example, the output device may be a Liquid Crystal Display (LCD), Light Emitting Diode (LED) display device, Cathode Ray Tube (CRT) display device, projector, or the like. The input device communicates with the processor 1101 and can receive user input in various ways. For example, the input device may be a mouse, keyboard, touch screen device, sensing device, or the like.

In some embodiments, the memory 1103 is configured to store program code 1102 for executing the methods of the present disclosure, and the processor 1101 can execute the program code 1102 stored in the memory 1103. That is, the network device 1100 can implement the method for selecting the network node provided in the method embodiments by the processor 1101 and the program code 1102 in the memory 1103. The program code 1102 may include one or more software modules. Optionally, the processor 1101 itself may also store program code or instructions for executing the solutions of the present disclosure.

In specific embodiments, the network device 1100 in the embodiments of the present disclosure may correspond to the UE in each of the method embodiments. The processor 1101 in the network device 1100 reads the program code 1102 in the memory 1103 or the program code or instructions stored in the processor 1101 itself, so that the network device 1100 shown in FIG. 11 can perform all or part of the operations performed by the UE.

In specific embodiments, the network device 1100 in the embodiments of the present disclosure may correspond to the AN device in each of the method embodiments. The processor 1101 in the network device 1100 reads the program code 1102 in the memory 1103 or the program code or instructions stored in the processor 1101 itself, so that the network device 1100 shown in FIG. 11 can perform all or part of the operations performed by the AN device.

In specific embodiments, the network device 1100 in the embodiments of the present disclosure may correspond to the distributed network node in each of the method embodiments. The processor 1101 in the network device 1100 reads the program code 1102 in the memory 1103 or the program code or instructions stored in the processor 1101 itself, so that the network device 1100 shown in FIG. 11 can perform all or part of the operations performed by the distributed network node.

The method for selecting the network node provided by the embodiments of the present disclosure has been described above. Corresponding to the method, the embodiments of the present disclosure further provide a network node selection system. The network node selection system provided by the embodiments of the present disclosure includes a UE, an AN device, and a plurality of distributed network nodes. The plurality of distributed network nodes include a first distributed network node. The UE is configured to:send a first message to the access network device, wherein the first message includes UE capability information and/or UE service information; receive a second message sent by the first distributed network node, wherein the second message includes attribute information of a first target network node; access the first target network node according to the attribute information of the first target network node. The access network device is configured to: determine the first distributed network node in the distributed network based on the UE capability information and/or the UE service information, and send a registration request message to the first distributed network node, wherein the registration request message includes the UE capability information and/or the UE service information. The first distributed network node is configured to:determine the first target network node in the distributed network based on the UE capability information and/or the UE service information, and send the second message to the UE.

In a possible implementation, the plurality of distributed network nodes further include a second distributed network node. The second distributed network node is a network node in the distributed network whose capability information and/or service information matches the UE capability information and/or the UE service information successfully, in a case that the capability information and/or service information provided by the first distributed network node does not match the UE capability information and/or the UE service information.

For the methods performed by the UE, the AN device, and the distributed network node, reference may be made to the relevant descriptions in the above embodiments, and details are not described herein again.

The method for selecting the network node provided by the embodiments of the present disclosure has been described above. Corresponding to the methods, the embodiments of the present disclosure further provide a network node selection apparatus.

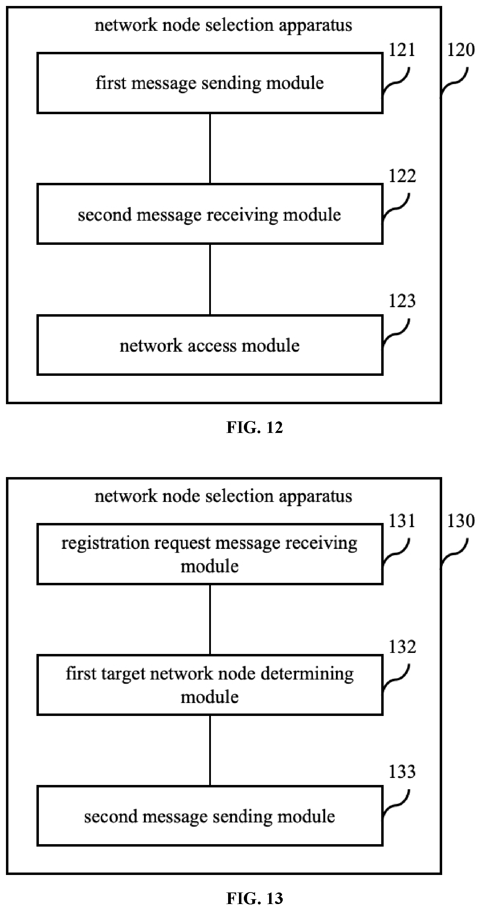

FIG. 12 is a schematic structural diagram of a network node selection apparatus provided by an embodiment of the present disclosure. The apparatus 120 is applied to a UE, and the UE is the UE shown in any one of FIG. 2 to FIG. 10. Based on the following multiple modules shown in FIG. 12, the network node selection apparatus 120 shown in FIG. 12 can perform all or part of operations performed by the UE. It should be understood that the apparatus 120 may include more additional modules than the shown modules or omit part of the modules shown, and the embodiments of the present disclosure impose no limitation thereon. As shown in FIG. 12, the apparatus 120 includes: a first message sending module 121, configured to send a first message to an access network device, wherein the first message includes UE capability information and/or UE service information, and the first message is configured to indicate the access network device to select a first distributed network node matching the UE capability information and/or the UE service information; a second message receiving module 122, configured to receive a second message sent by the first distributed network node, wherein the second message includes attribute information of a first target network node; a network access module 123, configured to access the first target network node according to the attribute information of the first target network node.

In some possible implementations, the UE capability information includes one or more of the following information: UE capability type, UE capability priority, UE capability usage time, and UE capability usage location. The UE capability type includes one or more of the following: computing power, Artificial Intelligence (AI) model, AI algorithm, and data service.

In some possible implementations, the UE service information includes one or more of the following information: UE service type, UE service requirement priority, UE service requirement usage time, and UE service requirement usage location. The UE service type includes one or more of the following: computing power service, computation service, and data service.

In some possible implementations, the first message includes AN parameters, and the UE capability information and/or the UE service information is encapsulated in the AN parameters.

In some possible implementations, the attribute information of the first target network node includes one or more of the following information: a node identity of the first target network node, service information provided by the first target network node, and service capability of the first target network node.

In some possible implementations, the second message receiving module 122 is configured to receive a registration accept message sent by the first distributed network node when the first target network node is the first distributed network node, wherein the registration accept message includes attribute information of the first distributed network node.

In some possible implementations, the second message receiving module 122 is configured to receive a registration accept message sent by the first distributed network node when the first target network node is the second distributed network node, wherein the registration accept message includes attribute information of the second distributed network node, and the second distributed network node is determined by the first distributed network node based on the UE capability information and/or the UE service information.

In some possible implementations, the second message receiving module 122 is configured to receive a UE policy message sent by the first distributed network node when the first target network node is the second distributed network node, wherein the UE policy message includes attribute information of the second distributed network node, and the second distributed network node is determined by the first distributed network node based on the UE capability information and/or the UE service information.

In some possible implementations, the second message receiving module 122 is further configured to update a UE policy based on the UE policy message, and send a response message corresponding to the UE policy message to the first target network node when the UE supports processing the UE policy.

In some possible implementations, the second message receiving module 122 is configured to receive a UE configuration update command message sent by the first distributed network node when the first target network node is the second distributed network node, wherein the UE configuration update command message includes attribute information of the second distributed network node, and the second distributed network node is determined by the first distributed network node based on the UE capability information and/or the UE service information.

In some possible implementations, the UE configuration update command message further includes a UE configuration update instruction. The second message receiving module 122 is further configured to: perform configuration update based on the UE configuration update instruction, and send a configuration update success message to the first target network node when the configuration update succeeds.

In some possible implementations, the apparatus further includes: a service requirement request module, configured to send a service requirement request message to the first target network node. The service requirement request message is configured to indicate the first target network node to determine a second target network node based on the UE activation capability and/or the UE service information, and the second target network node is configured to provide network services for the UE.

In some possible implementations, the UE activation capability and/or the UE service information is encapsulated in the service requirement request message; alternatively, the UE activation capability and/or the UE service information is stored in the first target network node.

In some possible implementations, when the second target network node is the first target network node, the first target network node is configured to provide network services for the UE; when the second target network node is a third distributed target network node, the third distributed network node provides network services for the UE by cooperating with the first target network node, wherein the third distributed network node is a network node having a cooperative relationship with the first target network node.

In some possible implementations, the apparatus further includes: an update request module, configured to send an update request message to the first target network node, wherein the update request message includes updated UE capability information and/or updated UE service information; the update request message is configured to indicate the first target network node to select the third target network node matching the updated UE capability information and/or the updated UE service information; receive a third message sent by the first target network node, wherein the third message includes attribute information of the third target network node; access the third target network node based on the attribute information of the third target network node.

The method for selecting the network node provided by the embodiments of the present disclosure has been described above. Corresponding to the method, the embodiments of the present disclosure further provide a network node selection apparatus.

FIG. 13 is a schematic structural diagram of a network node selection apparatus provided by an embodiment of the present disclosure. The apparatus is applied to a first distributed network node, and the first distributed network node is the first distributed network node shown in any one of FIG. 2 to FIG. 10. Based on the following multiple modules shown in FIG. 13, the network node selection apparatus shown in FIG. 13 can perform all or part of operations performed by the first distributed network node. It should be understood that the apparatus may include more additional modules than the shown modules or omit part of the modules shown, and the embodiments of the present disclosure impose no limitation thereon. As shown in FIG. 13, the apparatus 130 includes: a registration request message receiving module 131, configured to receive a registration request message sent by an access network device, wherein the registration request message includes UE capability information and/or UE service information; a first target network node determining module 132, configured to determine a first target network node in the distributed network based on the UE capability information and/or the UE service information; a second message sending module 133, configured to send a second message to the UE, wherein the second message includes attribute information of the first target network node, and the attribute information of the first target network node is configured to instruct the UE to access the first target network node.

In some possible implementations, the first target network node determining module 132 is configured to match the capability information and/or service information of the first distributed network node with the UE capability information and/or the UE service information; if the matching between the capability information and/or service information of the first distributed network node and the UE capability information and/or the UE service information succeeds, the first distributed network node may be determined as the first target network node.

In some possible implementations, the second message sending module 133 is configured to send a registration accept message to the UE, wherein the registration accept message includes attribute information of the first distributed network node, and the attribute information of the first distributed network node is configured to indicatet the UE to access the first distributed network node.

In some possible implementations, the first target network node determining module 132 is configured to: if the capability information and/or service information of the first distributed network node fails to match the UE capability information and/or the UE service information, perform matching processing between the capability information and/or service information provided by other distributed network nodes in the distributed network and the UE capability information and/or the UE service information; determine the second distributed network node with successful matching as the first target network node.

In some possible implementations, the second message sending module 133 is configured to send a registration accept message to the UE, wherein the registration accept message includes attribute information of the second distributed network node, and the attribute information of the second distributed network node is configured to indicate the UE to access the second distributed network node.

In some possible implementations, the second message sending module 133 is configured to send a UE policy message to the UE, wherein the UE policy message includes attribute information of the second distributed network node, and the attribute information of the second distributed network node is configured to indicate the UE to access the second distributed network node.

In some possible implementations, the second message sending module 133 is configured to send a UE configuration update command message to the UE, wherein the UE configuration update command message includes attribute information of the second distributed network node, and the attribute information of the second distributed network node is configured to indicate the UE to access the second distributed network node.

In some possible implementations, the apparatus further includes: a service requirement request processing module, configured to receive a service requirement request message sent by the UE; acquire UE activation capability and/or UE service information; in response to an indication of the service requirement request message, determine a second target network node according to the UE activation capability and/or the UE service information, wherein the second target network node is configured to provide network services for the UE.

In some possible implementations, acquiring the UE activation capability and/or the UE service information includes: acquiring the UE activation capability and/or the UE service information included in the service requirement request message, if the service requirement request message includes the UE activation capability and/or the UE service information; acquiring the UE activation capability and/or the UE service information already stored in the first target network node, if the service requirement request message does not include the UE activation capability and/or the UE service information.

In some possible implementations, the service requirement request processing module is configured to determine whether the capability information and/or service information of the first target network node itself meets the UE activation capability and/or the UE service information; if the capability information and/or service information of the first target network node itself meets the UE activation capability and/or the UE service information, determine the first target network node as the second target network node, and the first target network node provides network services for the UE.

In some possible implementations, the service requirement request processing module is configured to, if the capability information and/or service information of the first target network node itself does not meet the UE activation capability and/or the UE service information, determine a third distributed network node having a cooperative relationship with the first target network node as the second target network node,wherein the third distributed network node provides network services for the UE by cooperating with the first target network node.

In some possible implementations,the capability status and/or service requirement status of the first target network node itself includes: the capability priority and/or service requirement priority being served by the first target network; the UE activation capability and/or the UE service information includes: the UE activation capability priority and/or the UE service requirement priority; the capability information and/or service information of the first target network node itself not meeting the UE activation capability and/or the UE service information includes: the capability priority and/or service requirement priority being served by the first target network being higher than the UE activation capability priority and/or the UE service requirement priority.

In some possible implementations,the capability information and/or service information of the first target network node includes: the capability usage time and/or service requirement usage time being served by the first target network; the UE activation capability and/or the UE service information includes: the UE activation capability usage time and/or the UE service requirement usage time; the capability information and/or service information of the first target network node not meeting the UE activation capability and/or the UE service information includes: the capability usage time and/or service requirement usage time being served by the first target network being longer than the UE activation capability usage time and/or the UE service requirement usage time.

In some possible implementations,the capability information and/or service information of the first target network node includes: the capability usage location and/or service requirement usage location being served by the first target network; the UE activation capability and/or the UE service information includes: the UE activation capability usage location and/or the UE service requirement usage location; the capability information and/or service information of the first target network node not meeting the UE activation capability and/or the UE service information includes: the capability usage location and/or service requirement usage location being served by the first target network being the same as the UE activation capability usage location and/or the UE service requirement usage location.

In some possible implementations, the apparatus includes: an update request processing module, configured to receive an update request message sent by the UE, wherein the update request message includes updated UE capability information and/or updated UE service information; determine a third target network node based on the updated UE capability information and/or the updated UE service information; send a third message to the UE, wherein the third message includes attribute information of the third target network node, and the attribute information of the third target network node is configured to indicate the UE to access the third target network node.

The method for selecting the network node provided by the embodiments of the present disclosure has been described above. Corresponding to the method, the embodiments of the present disclosure further provide a network node selection apparatus.

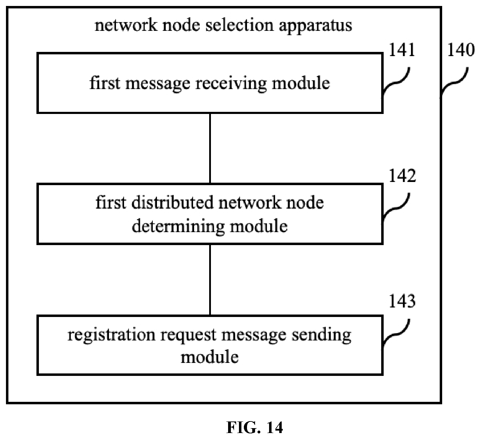

FIG. 14 is a schematic structural diagram of a network node selection apparatus provided by an embodiment of the present disclosure. The apparatus is applied to an AN device, and the AN device is the AN device shown in any one of FIG. 2 to FIG. 10. Based on the following multiple modules shown in FIG. 14, the network node selection apparatus shown in FIG. 14 can perform all or part of operations performed by the AN device. It should be understood that the apparatus 140 may include more additional modules than the shown modules or omit part of the modules shown, and the embodiments of the present disclosure impose no limitation thereon.

As shown in FIG. 14, the apparatus 140 includes: a first message receiving module 141, configured to receive a first message sent by a user equipment, wherein the first message includes UE capability information and/or UE service information; a first distributed network node determining module 142, configured to determine a first distributed network node in the distributed network based on the UE capability information and/or the UE service information; a registration request message sending module 143, configured to send a registration request message to the first distributed network node, wherein the registration request message includes the UE capability information and/or the UE service information, and the registration request message is configured to indicate the first distributed network node to select a first target network node matching the UE capability information and/or the UE service information.

In some possible implementations, the UE capability information includes one or more of the following information: UE capability type, UE capability priority, UE capability usage time, and UE capability usage location. The UE capability type includes one or more of the following: computing power, Artificial Intelligence (AI) model, AI algorithm, and data service.

In some possible implementations, the UE service information includes one or more of the following: UE service type, UE service requirement priority, UE service requirement usage time, and UE service requirement usage location. The UE service type includes one or more of the following: computing power service, computation service, and data service.

In some possible implementations, the first message includes AN parameters, and the UE capability information and/or the UE service information is encapsulated in the AN parameters.

It should be noted that the division of modules in the above embodiments is schematic and is only a logical function division; other division manners may be adopted in actual implementation. In addition, each functional module in each embodiment of the present disclosure may be integrated into one processing module, or each module may exist physically alone, or two or more modules may be integrated into one module. The above integrated modules may be implemented in the form of hardware or in the form of software functional modules.

When the integrated modules are implemented in the form of software functional modules and sold or used as independent products, they may be stored in a processor-readable storage medium. Based on such understanding, the technical solutions of the present disclosure, or the part that contributes to the prior art, or all or part of the technical solutions, may be embodied in the form of a software product. The computer software product is stored in a storage medium and includes several instructions for causing a computer device (which may be a personal computer, a server, a network device, etc.) or a processor to perform all or part of the steps of the methods described in various embodiments of the present disclosure.

It should be noted that the above apparatus provided in the embodiments of the present invention can implement all the method steps implemented by the above method embodiments and achieve the same technical effects. The parts and beneficial effects that are the same as those in the method embodiments in the present embodiment are not described in detail here again.

The present disclosure also provides a computer-readable storage medium. The storage medium stores at least one program instruction or code, which, when loaded and executed by a processor, causes a computer to implement the method for selecting a network node according to any one of the above.

The present disclosure provides a computer program. When the computer program is executed by a computer, it may cause a processor or the computer to perform steps and/or procedures in the above method embodiments.

The present disclosure provides a chip, including a processor, configured to invoke and run instructions stored in a memory, so that a communication device installed with the chip performs the method in the above aspects.

The present disclosure provides another chip, including: an input interface, an output interface, a processor, and a memory. The input interface, the output interface, the processor, and the memory are connected via an internal connection path. The processor is configured to execute code in the memory. When the code is executed, the processor is configured to perform the method in the above aspects.

In the above embodiments, the implementation may be entirely or partially implemented by software, hardware, firmware, or any combination thereof. When implemented by software, it may be entirely or partially implemented in the form of a computer program product. The computer program product includes one or more computer instructions. When the computer program instructions are loaded and executed on a computer, the processes or functions according to the present disclosure are generated in whole or in part. The computer may be a general-purpose computer, a special-purpose computer, a computer network, or other programmable apparatus. The computer instructions may be stored in a computer-readable storage medium or sent from one computer-readable storage medium to another computer-readable storage medium. For example, the computer instructions may be sent from a website, computer, server, or data center to another website, computer, server, or data center via a wired (such as coaxial cable, optical fiber, digital subscriber line) or wireless (such as infrared, wireless, microwave, etc.) manner. The computer-readable storage medium may be any available medium that can be accessed by a computer or a data storage device such as a server or data center that includes one or more available media integrated therein. The available medium may be a magnetic medium (such as a floppy disk, hard disk, magnetic tape), an optical medium (such as a DVD), or a semiconductor medium (such as a solid-state disk), etc.

The specific implementations described above further elaborate the objectives, technical solutions and beneficial effects of the present disclosure. It should be understood that the foregoing descriptions are merely specific implementations of the present disclosure, and are not intended to limit the protection scope of the present disclosure. Any modifications, equivalent replacements, improvements, etc., made on the basis of the technical solutions of the present disclosure shall all fall within the protection scope of the present disclosure.

Persons of ordinary skill in the art may realize that the method steps and modules described in the embodiments disclosed herein can be implemented by software, hardware, firmware, or any combination thereof. To clearly illustrate the interchangeability of hardware and software, in the above description, steps and components of each embodiment have been generally described in terms of functions. Whether these functions are performed by hardware or software depends on the specific application and design constraints of the technical solution. Persons of ordinary skill in the art may use different methods to implement the described functions for each specific application, but such implementation shall not be considered as exceeding the scope of the present disclosure.

Persons of ordinary skill in the art can understand that all or part of the steps of implementing the above embodiments may be completed by hardware, or may be completed by instructing relevant hardware through a program. The program may be stored in a computer-readable storage medium, which may be a read-only memory, a magnetic disk, an optical disk, or the like.

When implemented by software, it may be implemented in whole or in part in the form of a computer program product. The computer program product includes one or more computer program instructions. As an example, the methods of the embodiments of the present disclosure may be described in the context of machine-executable instructions, such as program modules executed in a device running on a real or virtual processor of a target. Generally, program modules include routines, programs, libraries, objects, classes, components, data structures, etc., that perform particular tasks or implement particular abstract data structures. In various embodiments, the functions of the program modules may be combined or divided between the described program modules. Machine-executable instructions for program modules may be executed in local or distributed devices. In distributed devices, program modules may be located in both local and remote storage media.

Computer program code for implementing the methods of embodiments of the present disclosure may be written in one or more programming languages.Such computer program code may be provided to a processor of a general-purpose computer, special-purpose computer, or other programmable data processing apparatus, such that the program code, when executed by the computer or other programmable data processing apparatus, causes the functions/operations specified in the flowcharts and/or block diagrams to be carried out.The program code may execute entirely on the computer, partly on the computer, as a stand-alone software package, partly on the computer and partly on a remote computer, or entirely on the remote computer or server.

In the context of embodiments of the present disclosure, computer program code or related data may be carried by any suitable carrier to enable a device, apparatus, or processor to perform various processes and operations described above.Examples of carriers include signals, computer-readable media, and so on.

Examples of signals may include electric, optical, radio, acoustic, or other forms of propagated signals, such as carrier waves, infrared signals, and the like.

A machine-readable medium may be any tangible medium that contains or stores a program for or in connection with an instruction execution system, apparatus, or device.A machine-readable medium may be a machine-readable signal medium or a machine-readable storage medium.A machine-readable medium may include, but is not limited to, an electronic, magnetic, optical, electromagnetic, infrared, or semiconductor system, apparatus, or device, or any suitable combination thereof.More detailed examples of machine-readable storage media include an electrical connection having one or more wires, a portable computer diskette, a hard disk, a random-access memory (RAM), a read-only memory (ROM), an erasable programmable read-only memory (EPROM or flash memory), an optical storage device, a magnetic storage device, or any suitable combination thereof.

Persons skilled in the art can clearly understand that, for the convenience and simplicity of description, reference may be made to the corresponding processes in the foregoing method embodiments for the specific working processes of the systems, apparatuses, and modules described above, which are not repeated herein.

In the several embodiments provided in the present disclosure, it should be understood that the disclosed systems, apparatuses, and methods may be implemented in other manners.For example, the apparatus embodiments described above are merely illustrative; for instance, the division of modules is only a logical function division, and other division manners may be adopted in actual implementation.For example, multiple modules or components may be combined or integrated into another system, or some features may be omitted or not performed.In addition, the mutual coupling or direct coupling or communication connection shown or discussed may be indirect coupling or communication connection through some interfaces, apparatuses, or modules, and may also be in electrical, mechanical, or other forms of connection.

Modules described as separate components may or may not be physically separate, and components shown as modules may or may not be physical modules, that is, they may be located in one place, or may be distributed to multiple network modules. Some or all of the modules may be selected according to actual needs to achieve the objectives of the solutions in the embodiments of the present disclosure.

In addition, each functional module in each embodiment of the present disclosure may be integrated into one processing module, or each module may exist physically alone, or two or more modules may be integrated into one module. The above integrated modules may be implemented in the form of hardware or in the form of software functional modules.

When the integrated module is implemented in the form of a software functional module and sold or used as an independent product, it may be stored in a computer-readable storage medium. Based on such understanding, the technical solutions of the present disclosure, or the part that contributes to the prior art, or all or part of the technical solutions may be embodied in the form of a software product. The computer software product is stored in a storage medium and includes several instructions for causing a computer device (which may be a personal computer, a server, a network device, etc.) to execute all or part of the steps of the methods in various embodiments of the present disclosure. The foregoing storage medium includes: a USB flash drive, a removable hard disk, a read-only memory (ROM), a random access memory (RAM), a magnetic disk, an optical disk, or other various media that can store program codes.

The terms such as "first" and "second" in the present disclosure are used to distinguish identical or similar items with basically the same functions and effects. It should be understood that there is no logical or timing dependency between "first", "second" and "nth", nor is there any limitation on the quantity or execution order. It should also be understood that although the following description uses the terms first, second, etc. to describe various elements, these elements should not be limited by the terms. These terms are only used to distinguish one element from another.

It should also be understood that, in various embodiments of the present disclosure, the sequence numbers of the processes do not mean the execution order. The execution order of the processes should be determined by their functions and internal logic, and shall not constitute any limitation on the implementation processes of the embodiments of the present disclosure.

The term "at least one"in the present disclosure means one or more, and the term "multiple" in the present disclosure means two or more. For example, multiple second messages refer to two or more second messages. The terms "system" and "network" in the present disclosure are often used interchangeably.

It should be understood that the terms used in the description of various examples herein are only for describing specific examples and are not intended to be limiting. As used in the description of various examples and the appended claims, the singular forms "a", "an" and "the" are intended to include the plural forms as well, unless the context clearly indicates otherwise.

It should also be understood that the terms "include", "includes", "including", "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

It should also be understood that the terms "if" and "when" may be interpreted to mean "when" or "upon" or "in response to determining" or "in response to detecting". Similarly, depending on the context, the phrases "if determining..." or "if detecting [the stated condition or event]"may be interpreted to mean "upon determining..."or "in response to determining..." or "upon detecting [the stated condition or event]" or "in response to detecting [the stated condition or event]".

It should be understood that determining B according to A does not mean determining B only according to A, and B may also be determined according to A and/or other information.

It should also be understood that references throughout the specification to " one embodiment", "an embodiment", or "a possible implementation"mean that a particular feature, structure, or characteristic related to the embodiment or implementation manner is included in at least one embodiment of the present disclosure. Therefore, the appearances of "in one embodiment" or "in an embodiment" or "a possible implementation" in various places throughout the specification do not necessarily refer to the same embodiment. Furthermore, the particular features, structures or characteristics may be combined in any suitable manner in one or more embodiments.

## Claims

1. A method for selecting a network node, applied to a User Equipment UE, **characterized by** comprising:
sending a first message to an access network device, wherein the first message comprises UE capability information and/or UE service information, and the first message is configured to indicate the access network device to select a first distributed network node matching the UE capability information and/or the UE service information;
receiving a second message sent by the first distributed network node, wherein the second message comprises attribute information of a first target network node;
accessing the first target network node according to the attribute information of the first target network node.

2. The method according to claim 1, **characterized in that** the UE capability information comprises one or more of the following information: UE capability type, UE capability priority, UE capability usage time, and UE capability usage location;wherein the UE capability type comprises one or more of the following: computing power, Artificial Intelligence AI model, and AI algorithm, data service.

3. The method according to claim 1, **characterized in that** the UE service information comprises one or more of the following information: UE service type, UE service requirement priority, UE service requirement usage time, and UE service requirement usage location;wherein the UE service type comprises one or more of the following: computing power service, computation service, and data service.

4. The method according to claim 1, **characterized in that** the first message comprises AN parameters, and the UE capability information and/or the UE service information is encapsulated in the AN parameters.

5. The method according to claim 1, **characterized in that** the attribute information of the first target network node comprises one or more of the following information: a node identifier of the first target network node, service information provided by the first target network node, and network service capacity of the first target network.

6. The method according to Claim 1, **characterized in that** receiving the second message sent by the first distributed network node comprises:
receiving a registration accept message sent by the first distributed network node in the case that the first target network node is the first distributed network node, wherein the registration accept message comprises the attribute information of the first distributed network node.

7. The method according to claim 1, **characterized in that** receiving the second message sent by the first distributed network node comprises:
receiving a registration accept message sent by the first distributed network node in the case that the first target network node is a second distributed network node, wherein the registration accept message comprises attribute information of the second distributed network node, and the second distributed network node is determined by the first distributed network node based on the UE capability information and/or the UE service information.

8. The method according to claim 1, **characterized in that** receiving the second message sent by the first distributed network node comprises:
receiving a UE policy message sent by the first distributed network node in the case that the first target network node is a second distributed network node, wherein the UE policy message comprises attribute information of the second distributed network node, and the second distributed network node is determined by the first distributed network node based on the UE capability information and/or the UE service information.

9. The method according to claim 8, **characterized in that** the method further comprises:
updating a UE policy based on the UE policy message;
sending a response message corresponding to the UE policy message to the first target network node in the case that the UE supports processing the UE policy.

10. The method according to claim 1, **characterized in that** receiving the second message sent by the first distributed network node comprises:
receiving a UE configuration update command message sent by the first distributed network node in the case that the first target network node is a second distributed network node, wherein the UE configuration update command message comprises attribute information of the second distributed network node, and the second distributed network node is determined by the first distributed network node based on the UE capability information and/or the UE service information.

11. The method according to claim 10, **characterized in that** the UE configuration update command message further comprises a UE configuration update indication, and the method further comprises:
performing configuration update based on the UE configuration update indication;
sending a configuration update success message to the first target network node in the case that the configuration update succeeds.

12. The method according to claim 1, **characterized in that** the method further comprises:
sending a service requirement request message to the first target network node;
wherein the service requirement request message is configured to indicate the first target network node to determine a second target network node based on UE activation capability and/or UE service information, and the second target network node is configured to provide network services for the UE.

13. The method according to claim 12, **characterized in that** the UE activation capability and/or the UE service information is encapsulated in the service requirement request message; or
the UE activation capability and/or the UE service information is stored in the first target network node.

14. The method according to claim 12, **characterized in that**,
in the case that the second target network node is the first target network node, the first target network node is configured to provide network services for the UE;
in the case that the second target network node is a third distributed target network node, the third distributed network node provides network services for the UE by cooperating with the first target network node, wherein the third distributed network node is a network node having a cooperative relationship with the first target network node.

15. The method according to claim 1, **characterized in that** the method further comprises:
sending an update request message to the first target network node, wherein the update request message comprises updated UE capability information and/or updated UE service information, and the update request message is configured to indicate the first target network node to select a third target network node matching the updated UE capability information and/or the updated UE service information;
receiving a third message sent by the first target network node, wherein the third message comprises attribute information of the third target network node;
accessing the third target network node based on the attribute information of the third target network node.

16. A method for selecting a network node, applied to a first distributed network node, **characterized by** comprising:
receiving a registration request message sent by an access network device, wherein the registration request message comprises User Equipment UE capability information and/or UE service information;
determining a first target network node in a distributed network based on the UE capability information and/or the UE service information;
sending a second message to the UE, wherein the second message comprises attribute information of the first target network node, and the attribute information of the first target network node is configured to indicate the UE to access the first target network node.

17. The method according to claim 16, **characterized in that** determining the first target network node in the distributed network based on the UE capability information and/or the UE service information comprises:
performing matching processing between capability information and/or service information of the first distributed network node and the UE capability information and/or the UE service information;
determining the first distributed network node as the first target network node in the case that the capability information and/or the service information of the first distributed network node successfully matches the UE capability information and/or the UE service information.

18. The method according to claim 17, **characterized in that** sending the second message to the UE comprises:
sending a registration accept message to the UE, wherein the registration accept message comprises attribute information of the first distributed network node, and the attribute information of the first distributed network node is configured to indicate the UE to access the first distributed network node.

19. The method according to claim 17, **characterized in that** the method further comprises:
performing matching processing between capability information and/or service information of other distributed network nodes in the distributed network and the UE capability information and/or the UE service information in the case that the capability information and/or the service information of the first distributed network node fails to match the UE capability information and/or the UE service information;
determining a second distributed network node as the first target network node, wherein capability information and/or service information of the second distributed network nodes successfully matches the UE capability information and/or the UE service information.

20. The method according to claim 19, **characterized in that** sending the second message to the UE comprises:
sending a registration accept message to the UE, wherein the registration accept message comprises attribute information of the second distributed network node, and the attribute information of the second distributed network node is configured to indicate the UE to access the second distributed network node.

21. The method according to claim 19, **characterized in that** sending the second message to the UE comprises:
sending a UE policy message to the UE, wherein the UE policy message comprises attribute information of the second distributed network node, and the attribute information of the second distributed network node is configured to indicate the UE to access the second distributed network node.

22. The method according to claim 19, **characterized in that** sending the second message to the UE comprises:
sending a UE configuration update command message to the UE, wherein the UE configuration update command message comprises attribute information of the second distributed network node, and the attribute information of the second distributed network node is configured to indicate the UE to access the second distributed network node.

23. The method according to claim 17, **characterized in that** the method further comprises:
receiving a service requirement request message sent by the UE;
obtaining UE activation capability and/or UE service information;
in response to an indication of the service requirement request message, determining a second target network node according to the UE activation capability and/or the UE service information, wherein the second target network node is configured to provide network services for the UE.

24. The method according to claim 23, **characterized in that** obtaining the UE activation capability and/or the UE service information comprises:
in the case that the service requirement request message comprises the UE activation capability and/or the UE service information, obtaining the UE activation capability and/or the UE service information comprised in the service requirement request message;
in the case that the service requirement request message does not comprise the UE activation capability and/or the UE service information, obtaining the UE activation capability and/or the UE service information stored in the first target network node.

25. The method according to claim 23, **characterized in that** determining the second target network node according to the UE activation capability and/or the UE service information comprises:
determining whether capability information and/or service information of the first target network node satisfies the UE activation capability and/or the UE service information;
in the case that the capability information and/or the service information of the first target network node satisfies the UE activation capability and/or the UE service information, determining the first target network node as the second target network node, wherein the first target network node provides network services for the UE.

26. The method according to claim 25, **characterized in that** the method further comprises:
in the case that the capability information and/or the service information of the first target network node fails to satisfy the UE activation capability and/or the UE service information, taking a third distributed network node having a cooperative relationship with the first target network node as the second target network node, wherein the third distributed network node provides network services for the UE by cooperating with the first target network node.

27. The method according to claim 26, **characterized in that** the capability information and/or the service information of the first target network node comprises: the capability priority being served and/or the service requirement priority being served by the first target network;
the UE activation capability and/or the UE service information comprises: UE activation capability priority and/or UE service requirement priority;
the case that the capability information and/or the service information of the first target network node fails to satisfy the UE activation capability and/or the UE service information comprises: the capability priority being served and/or the service requirement priority being served by the first target network is higher than the UE activation capability priority and/or the UE service requirement priority.

28. The method according to claim 26, **characterized in that** the capability information and/or the service information of the first target network node comprises: capability usage time being served and/or service requirement usage time being served by the first target network;
the UE activation capability and/or the UE service information comprises: UE activation capability usage time and/or UE service requirement usage time;
the case that the capability information and/or the service information of the first target network node fails to satisfy the UE activation capability and/or the UE service information comprises: the capability usage time being served and/or the service requirement usage time being served by the first target network is longer than the UE activation capability usage time and/or the UE service requirement usage time.

29. The method according to claim 26, **characterized in that** the capability information and/or the service information of the first target network node comprises: the capability usage location being served and/or the service requirement usage location being served by the first target network;
the UE activation capability and/or the UE service information comprises: UE activation capability usage location and/or UE service requirement usage location;
the case that the capability information and/or the service information of the first target network node fails to satisfy the UE activation capability and/or the UE service information comprises: the capability usage location being served and/or the service requirement usage location being served by the first target network is same as the UE activation capability usage location and/or the UE service requirement usage location.

30. The method according to claim 17, **characterized in that** the method further comprises:
receiving an update request message sent by the UE, wherein the update request message comprises updated UE capability information and/or updated UE service information;
determining a third target network node based on the updated UE capability information and/or the updated UE service information;
sending a third message to the UE, wherein the third message comprises attribute information of the third target network node, and the attribute information of the third target network node is configured to indicate the UE to access the third target network node.

31. A method for selecting a network node, applied to an access network device, **characterized by** comprising:
receiving a first message sent by a User Equipment UE, wherein the first message comprises UE capability information and/or UE service information;
determining a first distributed network node in a distributed network based on the UE capability information and/or the UE service information;
sending a registration request message to the first distributed network node, wherein the registration request message comprises the UE capability information and/or the UE service information, and the registration request message is configured to indicate the first distributed network node to select a first target network node matching the UE capability information and/or the UE service information.

32. The method according to claim 31, **characterized in that** the UE capability information comprises one or more of the following information: UE capability type, UE capability priority, UE capability usage time, and UE capability usage location; wherein the UE capability type comprises one or more of the following: computing power, Artificial Intelligence AI model, AI algorithm, and data service.

33. The method according to claim 31, **characterized in that** the UE service information comprises one or more of the following information: UE service type, UE service requirement priority, UE service requirement usage time, and UE service requirement usage location; wherein the UE service type comprises one or more of the following: computing power service, computation service, and data service.

34. The method according to claim 31, **characterized in that** the first message comprises AN parameters, and the UE capability information and/or the UE service information is encapsulated in the AN parameters.

35. A user equipment for selecting a network node, comprising: a memory, a transceiver, and a processor;
wherein the memory is configured to store a computer program; the transceiver is configured to send and receive data under the control of the processor; and the processor is configured to read the computer program from the memory and execute the method for selecting a network node according to any one of Claims 1 to 15.

36. A first distributed network node for selecting a network node, **characterized by** comprising: a memory, a transceiver, and a processor;
wherein the memory is configured to store a computer program; the transceiver is configured to send and receive data under the control of the processor; and the processor is configured to read the computer program from the memory and execute the method for selecting a network node according to any one of Claims 16 to 30.

37. An access network device for selecting a network node, **characterized by** comprising: a memory, a transceiver, and a processor;
wherein the memory is configured to store a computer program; the transceiver is configured to send and receive data under the control of the processor; and the processor is configured to read the computer program from the memory and execute the method for selecting a network node according to any one of Claims 31 to 34.

38. A network node selection apparatus, deployed in a User Equipment UE, **characterized by** comprising:
a first message sending module, configured to send a first message to an access network device, wherein the first message comprises UE capability information and/or UE service information, and the first message is configured to indicate the access network device to select a first distributed network node matching the UE capability information and/or the UE service information;
a second message receiving module, configured to receive a second message sent by the first distributed network node, wherein the second message comprises attribute information of a first target network node;
a network access module, configured to access the first target network node according to the attribute information of the first target network node.

39. A network node selection apparatus, deployed in a first distributed network node, **characterized by** comprising:
a registration request message receiving module, configured to receive a registration request message sent by an access network device, wherein the registration request message comprises User Equipment UE capability information and/or UE service information;
a first target network node determining module, configured to determine a first target network node in a distributed network based on the UE capability information and/or the UE service information;
a second message sending module, configured to send a second message to the UE, wherein the second message comprises attribute information of the first target network node, and the attribute information of the first target network node is configured to indicate the UE to access the first target network node.

40. A network node selection apparatus, deployed in an access network device, **characterized by** comprising:
a first message receiving module, configured to receive a first message sent by a User Equipment UE, wherein the first message comprises UE capability information and/or UE service information;
a first distributed network node determining module, configured to determine a first distributed network node in a distributed network based on the UE capability information and/or the UE service information;
a registration request message sending module, configured to send a registration request message to the first distributed network node, wherein the registration request message comprises the UE capability information and/or the UE service information, and the registration request message is configured to indicate the first distributed network node to select a first target network node matching the UE capability information and/or the UE service information.

41. A network node selection system, **characterized by** comprising: a User Equipment UE, an access network device, and a plurality of distributed network nodes, wherein the plurality of distributed network nodes comprises a first distributed network node;
the UE is configured to send a first message to the access network device, the first message comprising UE capability information and/or UE service information; receive a second message sent by the first distributed network node, the second message comprising attribute information of a first target network node; and access the first target network node according to the attribute information of the first target network node;
the access network device is configured to determine the first distributed network node in the distributed network based on the UE capability information and/or the UE service information, and send a registration request message to the first distributed network node, the registration request message comprising the UE capability information and/or the UE service information;
the first distributed network node is configured to determine the first target network node in the distributed network based on the UE capability information and/or the UE service information, and send the second message to the UE.

42. The system according to claim 41, **characterized in that** the plurality of distributed network nodes further comprises a second distributed network node;
wherein in the case that the capability information and/or service information of the first distributed network node fails to match the UE capability information and/or the UE service information, the second distributed network node is a network node with capability information and/or provided service information successfully matching the UE capability information and/or the UE service information from other distributed network nodes in the distributed network.

43. The system according to Claim 41, **characterized in that** the plurality of distributed network nodes further comprises a third distributed network node;
wherein the third distributed network node is a network node having a cooperative relationship with the first target network node.

44. A computer-readable storage medium, **characterized in that** the computer-readable storage medium stores a program, and the program is configured to enable the processor to execute the method according to any one of claims 1 to 15.

45. A computer-readable storage medium, **characterized in that** the computer-readable storage medium stores a program, and the program is configured to enable the processor to execute the method according to any one of claims 16 to 30.

46. A computer-readable storage medium, **characterized in that** the computer-readable storage medium stores a program, and the program is configured to enable the processor to execute the method according to any one of claims 31 to 34.
